# EUROPÄISCHE PATENTSCHRIFT

(11) **EP 1 420 929 B1**
(45) Veröffentlichungstag und Bekanntmachung des Hinweises auf die Patenterteilung: **12.10.2011**
(21) Anmeldenummer: 02779277.9
(22) Anmeldetag: 26.08.2002
(51) Int. Cl.: B29C 33/42, B29C 45/37, B29D 11/00, G02B 6/12, G01N 21/77

(54) **VERFAHREN ZUR HERSTELLUNG VON ABFORMKÖRPERN, INSBESONDERE OPTISCHEN STRUKTUREN, UND DEREN VERWENDUNG**
METHOD FOR PRODUCTION OF MOULDED BODIES, IN PARTICULAR OPTICAL STRUCTURES AND USE THEREOF
PROCEDE DE FABRICATION DE CORPS MOULES, EN PARTICULIER DE STRUCTURES OPTIQUES, ET LEUR UTILISATION

(30) Priorität: 30.08.2001 CH 161801
(43) Veröffentlichungstag der Anmeldung: 26.05.2004
(73) Patentinhaber: Bayer Technology Services GmbH, 51368 Leverkusen (DE); Weidmann Plastics Technology AG, 8640 Rapperswil (CH)
(72) Erfinder: CALLENBACH, Tilo, CH-8645 Jona (CH); GMÜR, Max, CH-9607 Mosnang (CH); LÜTHI, Heinz, CH-8853 Lachen (CH); BOPP, Martin, A., CH-4053 Basel (CH); PAWLAK, Michael, 79225 Laufenburg (DE); EHRAT, Markus, CH-4312 Magden (CH)
(74) Vertreter: Lütjens, Henning
(86) Internationale Anmeldenummer: PCT/EP2002/009499
(87) Internationale Veröffentlichungsnummer: WO 2003/020488

(56) Entgegenhaltungen:
- EP-A- 0 319 350
- EP-A- 0 496 358
- EP-A- 0 503 961
- EP-A- 0 540 843
- EP-A- 1 068 945
- EP-A- 1 102 254
- WO-A-87/02935
- WO-A-95/33197
- WO-A-95/33198
- WO-A-99/13320
- US-A- 4 619 804
- US-A- 4 815 843
- US-A- 5 082 629
- US-A- 5 728 324
- US-A- 5 756 130
- US-A- 5 759 455
- US-A- 5 783 371
- US-B1- 6 245 412
- DATABASE WPI Section Ch, Week 198542 Derwent Publications Ltd., London, GB; Class A32, AN 1985-259861 XP002220595 & JP 60 173738 A (NIPPON TELEGRAPH & TELEPHONE CORP), 7. September 1985 (1985-09-07)
- DATABASE WPI Section Ch, Week 198505 Derwent Publications Ltd., London, GB; Class A32, AN 1985-028752 XP002190103 & JP 59 224320 A (SANYO ELECTRIC CO), 17. Dezember 1984 (1984-12-17)
- PATENT ABSTRACTS OF JAPAN vol. 010, no. 266 (P-496), 11. September 1986 (1986-09-11) & JP 61 090344 A (RICOH CO LTD), 8. Mai 1986 (1986-05-08)
- DATABASE INSPEC [Online] INSTITUTE OF ELECTRICAL ENGINEERS, STEVENAGE, GB; DUBENDORFER J ET AL: "Reference pads for miniature integrated optical sensors" Database accession no. 5642018 XP002190102 & 3RD EUROPEAN CONFERENCE ON OPTICAL CHEMICAL SENSORS AND BIOSENSORS, EUROPT(R)ODE III, ZURICH, SWITZERLAND, 31 MARCH-3 APRIL 1996, Bd. B38, Nr. 1-3, Seiten 116-121, Sensors and Actuators B (Chemical), Jan.-Feb. 1997, Elsevier, Switzerland ISSN: 0925-4005
- DUEBENDORFER J ET AL: "COMPACT INTEGRATED OPTICAL IMMUNOSENSOR USING REPLICATED CHIRPED GRATING COUPLER SENSOR CHIPS" APPLIED OPTICS, OPTICAL SOCIETY OF AMERICA,WASHINGTON, US, Bd. 37, Nr. 10, 1. April 1998 (1998-04-01), Seiten 1890-1894, XP000754337 ISSN: 0003-6935

## Beschreibung

Die nachfolgend beschriebene Erfindung beinhaltet ein neuartiges Verfahren zur Herstellung eines Körpers aus einem thermoplastischen Kunststoff mit einer dreidimensional strukturierten Oberfläche, dadurch gekennzeichnet, dass die Abformung direkt von einem "Master" aus einem mit Metalloxid beschichteten Glas, ohne Aufbringung weiterer Beschichtungen auf der Oberfläche besagten "Masters", erfolgt. Das erfindungsgemässe Verfahren umfasst damit weniger Arbeitsschritte als entsprechende herkömmliche Abformverfahren, was zu Senkungen von Fertigungskosten führen wird. Ausserdem wird durch die geringere Anzahl der vor der Abformung an dem entsprechenden "Master" auszuführenden Bearbeitungsschritte das Risiko von Verletzungen der Oberfläche des Masters, welche sich unvermeidlich als Defekte in den abgeformten Körpern fortsetzen, deutlich vermindert, was einen wesentlichen Fortschritt im Produktionsverfahren bedeutet.

Eine defektfreie Oberfläche ist besonders wichtig für die Optimierung planarer Wellenleiter, insbesondere für Anwendungen in der Bioanalytik, um Streuung von geführtem Anregungslicht an Streuzentren und / oder aufgrund hoher Oberflächenrauhigkeit zu vermeiden. Angestrebt wird eine möglichst niedrige Oberflächenrauhigkeit eines planaren Wellenleiters.

Erfolgt die Einkopplung des Anregungslichts in den Wellenleiter mittels diffraktiver Reliefgitter, ist zugleich eine ausserordentliche Gleichmässigkeit und Reproduzierbarkeit dieser Strukturen mit Dimensionen von oft nur einigen Nanometern erforderlich. Im Falle einer Fertigung solcher Wellenleiter aus Kunststoffsubstraten werden damit hohe Anforderungen an entsprechende Abformverfahren gestellt.

Derartige periodische Strukturen, wie Oberflächenreliefgitter, in Verbindung mit darauf aufgebrachten dünnen Metallschichten (typischerweise aus Gold oder Silber mit Schichtdicken in der Grössenordnung von etwa 40 nm - 200 nm) auf einer darunterliegenden dielektrischen Schicht mit niedrigerem Brechungsindex sind auch geeignet zur Erzeugung der Bedingungen für eine Oberflächenplasmonenresonanz, welche, ähnlich wie die Wellenleitung in einem optischen Wellenleiter, mit der Ausbildung eines evaneszenten Feldes (mit exponentiellem Abfall der Intensität in Richtung der benachbarten Medien), entlang der Ausbreitung des Oberflächenplasmons (anstelle der geführten Welle) verbunden ist. Die Ausbildung des evaneszenten Feldes wird nachfolgend am Beispiel eines optischen Wellenleiters noch genauer erklärt. Unter dem Begriff der Wellenleitung soll hier verstanden werden, dass die Ausbreitungslänge einer in einer hochbrechenden Schicht "geführten" Welle in dieser Schicht, im Strahlenmodell der klassischen Optik ausgedrückt, mindestens dem Abstand zwischen zwei Totalreflexionen an den einander gegenüberliegenden Begrenzungsflächen dieser Schicht zu den benachbarten niederbrechenden Medien oder Schichten entspricht. In einem verlustarmen Wellenleiter kann die Ausbreitungslänge etliche Zentimeter (oder sogar Kilometer, wie in der Telekommunikation) betragen; in einem Wellenleiter mit einer grossflächig modulierten Gitterstruktur (in Abhängigkeit von der Gittertiefe) können es auch nur Mikrometer bis wenige Millimeter sein, was vergleichbar mit der typischen Ausbreitungslänge von Oberflächenplasmonen (typischerweise in der Grössenordnung von 100 µm) ist. Derartige im wesentlichen planare optische Strukturen, wie die nachfolgend noch genauer beschriebenen optischen Schichtwellenleiter und Strukturen mit einer dünnen Metallbeschichtung auf einem dielektrischen Substrat niederigeren Brechnungsindexes, welche zur Erzeugung eines evaneszenten Feldes geeignet sind, sollen gemeinsam als "planare optische Strukturen zur Erzeugung von Evaneszentfeld-Messplattformen" bezeichnet werden.

Die Erfindung betrifft auch variable Ausführungsformen "planarer optischer Strukturen zur Erzeugung von Evaneszentfeld-Messplattformen", worin eine Schicht (b) ein Material umfasst aus der Gruppe, die von Cyclo-Olefin-Polymeren und Cyclo-Olefin-Copolymeren gebildet wird. Insbesondere betrifft die Erfindung dabei einen planaren optischen Schichtwellenleiter, umfassend eine erste, im wesentlichen optisch transparente, wellenleitende Schicht (a) mit Brechungsindex n₁ und eine zweite, im wesentlichen optisch transparente Schicht (b) mit Brechungsindex n₂, wobei n₁ > n₂, dadurch gekennzeichnet, dass die zweite Schicht (b) ein Material umfasst aus der Gruppe, die von Cyclo-Olefin-Polymeren und Cyclo-Olefin-Copolymeren gebildet wird.

Zur Erreichung tiefer Nachweisgrenzen sind in den vergangenen Jahren zahlreiche Messanordnungen entwickelt worden, in denen der Nachweis des Analyten auf dessen Wechselwirkung mit dem evaneszenten Feld beruht, welches mit der Lichtleitung in einem optischen Wellenleiter verbunden ist, wobei auf der Oberfläche des Wellenleiters biochemische oder biologische Erkennungselemente zur spezifischen Erkennung und Bindung der Analytmoleküle immobilisiert sind.

Koppelt man eine Lichtwelle in einen optischen Wellenleiter ein, der von optisch dünneren Medien, d.h. Medien mit niedrigerem Brechungsindex, umgeben ist, so wird sie durch Totalreflexion an den Grenzflächen der wellenleitenden Schicht geführt. In die optisch dünneren Medien tritt dabei ein Bruchteil des elektromagnetischen Feldes ein. Diesen Anteil bezeichnet man als evaneszentes oder quergedämpftes Feld. Die Stärke des evaneszenten Feldes ist sehr stark abhängig von der Dicke der wellenleitenden Schicht selbst sowie vom Verhältnis der Brechungsindices der wellenleitenden Schicht und der sie umgebenden Medien. Bei dünnschichtigen Wellenleitern, d. h. Schichtdicken von derselben oder niedrigerer Dicke als der zu führenden Wellenlänge, können diskrete Moden des geleiteten Lichts unterschieden werden. Analytnachweisverfahren im evaneszenten Feld eines Wellenleiters haben den Vorteil, dass die Wechselwirkung mit dem Analyten auf die Eindringtiefe des evaneszenten Feldes ins angrenzende Medium, in der Grössenordnung von einigen hundert Nanometern, beschränkt ist und Störsignale aus der Tiefe des Mediums weitgehend vermieden werden können. Die ersten vorgeschlagenen derartigen Messanordnungen beruhten auf hochmultimodalen, selbsttragenden Einschichtwellenleitern, wie beispielsweise Fasern oder Plättchen aus transparentem Kunststoff oder Glas, mit Stärken von einigen hundert Mikrometern bis zu mehreren Millimetern.

Zur Verbesserung der Empfindlichkeit und gleichzeitig einfacheren Herstellung in Massenfabrikation wurden planare Dünnschichtwellenleiter vorgeschlagen. Ein planarer Dünnschichtwellenleiter besteht im einfachsten Fall aus einem Dreischichtsystem:

Trägermaterial, wellenleitende Schicht, Superstrat (bzw. zu untersuchende Probe), wobei die wellenleitende Schicht den höchsten Brechungsindex besitzt. Zusätzliche Zwischenschichten können die Wirkung des planaren Wellenleiters noch verbessern. Wesentliche Anforderungen an die Eigenschaften der wellenleitenden Schichts selbst sowie an die damit in Kontakt stehende Schicht in Richtung des Substrats oder Trägermaterials bzw. an das Substrat bzw. das Trägermaterial selbst sind dabei eine möglichst hohe Transparenz bei der Wellenlänge des zu leitenden Lichts, verbunden mit einer möglichst niedrigen Eigenfluoreszenz, und eine möglichst niedrige Oberflächenrauhigkeit, um eine möglichst störungsfreie Lichtleitung zu ermöglichen. Als Substratmaterialien eignen sich daher beispielsweise Glas oder Kunststoffe mit den entsprechenden Eigenschaften, wie vielfach beschrieben worden ist (z. B. in WO 95/33197 und WO 95/33198), wobei sich Glas bezüglich Fluoreszenzarmut (bei Anregung im sichtbaren Spektrum) und niedriger Oberflächenrauhigkeit bis jetzt als vorteilhafter erwiesen hat. Ursache für die für Glassubstrate erreichbare niedrige Oberflächenrauhigkeit ist dabei vor allem die Möglichkeit, diese auf hohe Temperaturen aufzuheizen, so dass die Ausbildung einer rauhigkeitserhöhenden Mikrosäulenstruktur weitgehend verhindert werden kann.

Im Falle von Kunststoffsubstraten ist vielfach die Aufbringung einer Zwischenschicht zwischen dem Substrat und der wellenleitenden Schicht erforderlich, um, z. B. für Fluoreszenzmessungen, den Beitrag der Eigenfluoreszenz des Substrats zu vermindern.

In der EP 533,074 werden ein optischer Wellenleiter mit einem Substrat aus Kunststoff bzw. mit einem hohen organischen Anteil und einer anorganischen wellenleitenden Schicht sowie Verfahren zur Herstellung dieses Wellenleiters beschrieben. Bevorzugt werden dabei thermoplastisch verarbeitbare Kunststoffe, insbesondere Polycarbonate, Polymethylmethacrylate (PMMA) und Polyester.

Innerhalb der Gruppe dieser Kunststoffe ist PMMA für die besten optischen Eigenschaften, d.h. insbesondere Fluoreszenzarmut, bekannt. Als nachteilig von PMMA wird jedoch dessen niedrige Temperaturstabilität beschrieben, welche Dauergebrauchstemperaturen oberhalb von 60°C bis 90°C, wie sie beispielsweise für Nukleinsäure-Hybridisierungsassays teilweise erforderlich sind, nicht erlaubt.

Den ungünstigeren physikalisch-chemischen, insbesondere optischen Eigenschaften von bekannten Schichtwellenleitern mit Kunststoffen als Substrat (= im wesentlichen optisch transparente Schicht (b)), steht die leichtere Verarbeitbarkeit dieser Stoffe, insbesondere zur Erzeugung einer strukturierten Oberfläche, z. B. durch Abformung von einem geeignet strukturierten Master, im Verleich zu Glassubstraten, entgegen. Derartige Abformverfahren zur Erzeugung strukturierter Kunststoffoberflächen sind im allgemeinen kostengünstiger als die üblicherweise photolithographische Oberflächenstrukturierung von Glassubstraten. Verfahren gemäß dem Oberbegriff des Anspruchs 1 sind bekannt aus WO-A-9913320, WO-A-9533197, WO-A-9533198, Applied Optics, Band 37, Nr. 10, Seiten 1890-1894, 1998 und US-A-4 815 843.

Eine planare optische Struktur gemäß dem Oberbegriff des Anspruchs 13 ist auch bekannt aus diesen Dokumenten.

Es besteht also das Bedürfnis nach optischen Schichtwellenleitern, oder allgemeiner optischen Strukturen zur Erzeugung einer Evaneszentfeld-Messplattform, mit ähnlich günstigen optischen Eigenschaften wie Schichtwellenleitern basierend auf Glassubstraten, welche sich aber kostengünstiger herstellen lassen.

Dieses Bedürfnis wird mit dem Verfahren nach Anspruch 1, die planare optische Struktur nach Anspruch 13, sowie die Verwendung nach Anspruch 42 erfüllt.

Überraschend wurde jetzt gefunden, dass mit Substraten aus Cyclo-Olefin-Polymeren (COP) oder Cyclo-Olefin-Copolymeren (COC), welche in der EP 533,074 nicht benannt sind, optische Strukturen zur Erzeugung von Evaneszentfeld-Messplattformen und insbesondere Schichtwellenleiter hergestellt werden können, welche sich durch eine besonders niedrige Eigenlumineszenz bzw. -fluoreszenz auszeichnen, was insbesondere für fluoreszenzbasierende Messmethoden von grossem Vorteil ist, und welche ausserdem sehr niedrige Ausbreitungsverluste des geführten Lichts aufweisen. Ausserdem wurde überraschend ein neues Verfahren zur Herstellung der erfindungsgemässen Schichtwellenleiter gefunden, mit dem sich diese besonders einfach und in sehr guter Qualität von einem Master abformen lassen.

Als günstige Eigenschaften von optischen Komponenten beruhend auf COP, im Vergleich zu anderen in der Optik eingesetzten Kunststoffen, werden in einem Produkteprospekt der Nippon Zeon Co. Ltd., unter der Bezeichnung "Zeonex", unter anderem eine sehr geringe Wasseraufnahme, hohe Hitzebeständigkeit, geringer Gehalt an Verunreinigungen und vergleichweise gute chemische Beständigkeit aufgeführt.

In der US 6,063,886 werden verschiedene Cyclo-Olefin-Copolymere und daraus durch Spritzguss hergestellte Komponenten, insbesondere für die Optik, beansprucht. Hinweise auf den Einsatz für optische Wellenleiter, mit den damit verbundenen sehr spezifischen Anforderungen, gibt es jedoch nicht. Es werden auch keinerlei Angaben für mögliche Abformungsverfahren zur Erzeugung dreidimensionaler Strukturen aus COC gemacht.

In der US 6,120,870 werden eine optische "Disk", basierend auf COP, und ein Abformungsverfahren zur Herstellung dieser (strukturierten) Disk von einem Silicium-Master beschrieben, wobei in den aufgeführten Varianten des Abformungsverfahrens jeweils eine Harzschicht zwischen dem Master und der zu strukturierenden COP-Disk verwendet wird, welche photochemisch, durch UV-Beleuchtung, oder thermisch ausgehärtet wird:

In der US 5,910,287 werden Mikrotiter-Platten ("multi-well plates") mit COC oder COP als Material des Plattenbodens, zur Verringerung der Eigenfluoreszenz einer derartigen Platte für fluoreszenzbasierende Untersuchungen, beschrieben. Als Herstellungsverfahren werden u.a. Spritzguss mittels eines "RIM"- (Reaction Injection Molding) oder eines "LIM"-(Liquid Injection Molding) -Verfahrens beschrieben.

"RIM" (Reaktionsgussverfahren) ist ein Niederdruck-Misch- und -Einspritzverfahren, bei dem zwei oder mehr flüssige Komponenten in ein geschlossenes Formnest ("mold") gespritzt werden, wo unter rascher Polymerisation ein Plastikkörper geformt wird. Als mögliche Probleme des RIM-Verfahrens werden insbesondere Blasenbildung während der härtung, schlechte Formfüllung und schwierige Entformbarkeit des hergestellten Plastikkörpers beschrieben (H. Vollmer, W. Ehrfeld, P. Hagmann, "Untersuchungen zur Herstellung von galvanisierbaren Mikrostrukturen mit extremer Strukturhöhe durch Abformung mit Kunststoff im Vakuum-Reaktionsgiessverfahren", Bericht 4267 des KfK, Karlsruhe, Deutschland, 1987; P. Hagmann, W. Ehrfeld, "Fabrication of Microstructures of extreme Structural Heights by Reaction Injection Molding", International Polymer Processing IV (1989) 3, S. 188-195). Auch wenn diese Probleme weitgehend gelöst werden, verbleibt als ein Nachteil des RIM-Verfahrens relativ lange Zykluszeiten von einigen Minuten (T. Bouillon, "Mikromechanik - Bedeutung und Anwendung von Mikrostrukturen aus Kunststoffen, Metallen und Keramik", Studienarbeit am IKV, RWTH Aachen, zitiert in A. Rogalla, "Analyse des Spritzgießens mikrostrukturierter Bauteile aus Thermoplasten", IKV Berichte aus der Kunststoffverarbeitung, Band 76, Verlag Mainz, Wissenschaftsverlag Aachen, Deutschland, 1998). Der "LIM"-Prozess (Liquid Injection Molding) wird sogar als noch zeitaufwendiger, mit typischerweise 5 bis 10 Minuten Zyklusdauer, beschrieben.

Für das erfindungsgemässe Verfahren zur Abformung von einem "Master" aus einem mitMetalloxid beschichteten Glas, als Teil eines Abformwerkzeugs, sowie zur Herstellung eines planaren optischen Schichtwellenleiters, wird im Gegensatz zu den vorangehend beschriebenen Abformverfahren ein Variotherm-Spritzgussverfahren (A. Rogalla, "Analyse des Spritzgießens mikrostrukturierter Bauteile aus Thermoplasten", IKV Berichte aus der Kunststoffverarbeitung, Band 76, Verlag Mainz, Wissenschaftsverlag Aachen, Deutschland, 1998) bevorzugt. Dieses rein physikalische Verfahren, basierend auf Verflüssigung des zunächst als Granulat vorliegenden Kunststoffs bei erhöhter Temperatur, ermöglicht es, Plastikkörper mit auch sehr feinen Strukturen in sehr kurzen Zykluszeiten herzustellen (W. Michaeli, H. Greif, G. Kretzschmar, H. Kaufmann und R. Bertulait, "Technologie des Spritzgießens", Carl Hanser Verlag München Wien 1993, S. 69).

Die Erfindung betrifft auch ein Verfahren zur Herstellung eines Körpers aus einem thermoplastischen Kunststoff mit einer dreidimensional strukturierten Oberfläche, dadurch gekennzeichnet, dass die Abformung direkt von einem "Master" aus einem mit Metalloxid beschichteten Glas, ohne Aufbringung weiterer Beschichtungen auf der Oberfläche besagten "Masters", erfolgt.

Dieses Abformverfahren bietet gegenüber den bekannten Verfahren der Abformung von beschichteten, beispielsweise galvanisierten Mastern, z. B. von sogenannten Nickel-Shims, eine Reihe von Vorteilen. Insbesondere sind die erfindungsgemäss abzuformenden Materialien, d.h. mit Metalloxid beschichtete Gläser, härter und kratzbeständiger, was eine höhere Anzahl von Abformungen von ein- und demselben Master ermöglicht. Ausserdem werden bei der Herstellung des Masters zusätzliche Bearbeitungsschritte, wie beispielsweise die Aufbringung einer zusätzlichen Beschichtung vermieden. Dieses vereinfacht nicht nur die Herstellung des Masters, sondern vermeidet auch die Gefahr der Erzeugung zusätzlicher Defekte auf dem Master infolge der sonst notwendigen zusätzlichen Bearbeitungsschritte.

Es wird bevorzugt, dass das "Master" ein Material aus der Gruppe von Materialien umfasst, die von TiO₂ ZnO, Nb₂O₂,Ta₂O₅, HfO₂ oder ZrO₂ gebildet wird, wobei TiO₂ Ta₂O₅ oder Nb₂O₅ besonders bevorzugt werden.

Das Master selbst kann mit üblichen Verfahren zur Mikrostrukturierung, wie beispielsweise Photolithograpie, Laserablation, Elektronenstrahl- oder Ionenstrahlbearbeitung, hergestellt werden.

Das Verfahren zeichnet sich dabei dadurch aus, dass dreidimensionale Strukturen mit Abmessungen von 1-1000 nm sowie von 1 µm bis 1000 µm in einem einzigen Abformschritt abgeformt werden können. Insbesondere wenn gleichzeitig sehr kleine, aber auch grössere Strukturen abgeformt werden, bestehen natürlich hohe Anforderungen an die Oberflächenqualität des Masters. Ein höherer Aufwand bei der Herstellung des Masters wird jedoch mehr als kompensiert durch die Einsparung eines zweiten sonst notwendigen Bearbeitungsschritts des abgeformten Produkts.

Ausserdem ermöglicht das erfindungsgemässe Verfahren, ausgedehnte Körper mit einer dreidimensional strukturierten Oberfläche von mehr als 1 cm², bevorzugt von mehr als 10 cm², besonders bevorzugt von mehr als 100 cm², in einem einzigen Abformschritt abzuformen. Beispielsweise können Körper von der Grösse einer Standard-Mikrotiterplatte, mit Oberflächenstrukturen von Nanometern Grössenordnung, gleichzeitig abgeformt werden.

Die Abformung entsprechend dem erfindungsgemässen Verfahren kann mit allen bekannten Verfahren (wie RIM-Prozess, LIM-Prozess etc.) durchgeführt werden, die mit der Beschaffenheit des Masters vereinbar sind (z. B. bezüglich Beständigkeit gegenüber hohen Temperaturen oder Drucken). Zur Herstellung kleiner Produktserien wird vielfach Heissprägung ("Hot Embossing") von Kunststoffen durchgeführt. Entsprechend wird bevorzugt, dass die Abformung mittels eines Verfahrens erfolgt aus der Gruppe von Verfahren, welche Spritzguss ("Injection Molding"), "Reaction Injection Molding" (RIM), liquid Injection Molding" (LIM) und Heissprägung ("Hot Embossing") etc. umfasst.

Besonders bevorzugt erfolgt die Abformung mittels eines Spritzgussverfahrens, ganz besonders bevorzugt mittels eines Variotherm-Spritzgussverfahrens.

Geeignete Cyclo-Olefine sind beschrieben in den US-Patenten Nr. 5,278,238 (B. L. Lee et al.), 4,874,808 (Minami et al.), 4,918,133 (Moriya et al.), 4,,935,475 (Kishiinura et al.), 4,948,856 (Minchak et al.), 5,115,052 (Wamura et al.), 5,206,306 (Shen), 5,270,393 (Sagane et al.), 5,272,235 (Wakatsuru et al.), 5,278,214 (Moriya et al.), 5,534,606 (Bennett et al.), 5,532,030 (Hirose et al.), 4,689,380 (Hirose et al.), 4,689,380 (Nahm et al.) und 4,899,005 (Lane et al.). Bevorzugt werden Cyclo-Olefine (z. B. Cyclopenten, Cyclohexen und Cyclohepten) und ihre Polyethylen-Copolymere, ebenso wie die entsprechenden thermoplastischen Olefin-Polymeren amorpher Struktur (TOPAS -Linie) von Hoechst (Deutschland). Besonders bevorzugt werden dabei die Kunststoffe TOPAS 8007, 5013, 6013, 6015 und 6017. Bevorzugt werden auch unter den Produktnamen ZEONEX (z. B. Polymeren Nr. 480, 480R, E48R und 490K) und ZEONOR (Polymeren Nr. 1020R, 1060R, 1420R, 1600R) vertriebene Cyclo-Olefin-Polymere der Firma Nippon Zeon Co., Japan.

Gegenstand der Erfindung ist insbesondere ein Verfahren zur Herstellung einer planaren optischen Struktur zur Erzeugung einer Evaneszentfeld-Messplattform, dadurch gekennzeichnet, dass besagte Evaneszentfeld-Messplattform ein Mehrschichtsystem umfasst, mit einer Metallschicht (a') oder einer im wesentlichen optisch transparenten, wellenleitenden Schicht (a) mit Brechungsindex n₁ und mindestens einer zweiten, im wesentlichen optisch transparenten Schicht (b) mit Brechungsindex n₂, wobei n₁ > n₂, und wobei die zweite Schicht (b) aus einem thermoplastischen Kunststoff besteht und direkt von einem "Master" aus einem mit Metalloxid beschichteten Glas, als Teil eines Abformwerkzeugs, ohne Aufbringung weiterer Beschichtungen auf der Oberfläche besagten "Masters", abgeformt wird.

Eine bevorzugte Variante ist hierbei ein Verfahren zur Herstellung einer planaren optischen Struktur zur Erzeugung einer Evaneszentfeld-Messplattform, dadurch gekennzeichnet, dass es sich bei besagter Evaneszentfeld-Messplattform um eine planare optische Struktur zur Erzeugung einer Oberflächenplasmonenresonanz handelt. Vorzugsweise umfasst die Metallschicht dieser optischen Struktur Gold oder Silber. Besonders geeignet sind dabei Schichtdicken zwischen 40 nm und 200 nm, besonders bevorzugt zwischen 40 nm und 100 nm. Es ist vorteilhaft, wenn das mit der Metallschicht in Kontakt stehende Material der Schicht (b) oder einer optionalen zusätzlichen dielektrischen Schicht ("buffer layer") einen niedrigen Brechungsindex n < 1.5, besonders bevorzugt n < 1.35, hat.

In einer anderen, besonders bevorzugten Variante handelt es sich bei dem erfindungsgemässen Herstellungsverfahren um ein Verfahren zur Herstellung eines planaren optischen Schichtwellenleiters, umfassend eine erste, im wesentlichen optisch transparente, wellenleitende Schicht (a) mit Brechungsindex n₁ und eine zweite, im wesentlichen optisch transparente Schicht (b) mit Brechungsindex n₂, wobei n₁ > n₂, und wobei die zweite Schicht (b) besagten Schichtwellenleiters aus einem thermoplastischen Kunststoff besteht und direkt von einem "Master" aus einem mit Metalloxid beschichteten Glas, als Teil eines Abformwerkzeugs, ohne Aufbringung weiterer Beschichtungen auf der Oberfläche besagten "Masters", abgeformt wird.

Unter dem Begriff "planar" soll hierbei verstanden werden, dass, abgesehen von Oberflächenrauhigkeiten oder -strukturierungen zur Lichteinkopplung oder -auskopplung und gegebenenfalls in der Oberfläche des Schichtwellenleiters strukturierten Ausnehmungen zur Erzeugung von Probenbehältnissen, der Krümmungsradius der Oberfläche besagten Schichtwellenleiters sowohl parallel als auch senkrecht zu der Ausbreitungsrichtung eines in der wellenleitenden Lichts mindestens lcm, bevorzugt mindestens 5 cm beträgt.

Unter der Bezeichnung "im wesentlichen optisch transparent" soll verstanden werden, dass eine hiermit charakterisierte Schicht zumindest bei der Wellenlänge eines von einer äusseren Lichtquelle eingestrahlten Lichts für dessen optischen Weg senkrecht zu besagter Schicht zu mindestens 95 % transparent ist, sofern die Schicht nicht reflektierend ist. Im Falle von teilreflektierenden Schichten wird unter "im wesentlichen optisch transparent" verstanden, dass die Summe von transmittiertem, reflektiertem und gegebenenfalls in eine Schicht eingekoppeltem und darin geleitetem Licht am Ort des Auftreffens des eingestrahlten Lichts mindestens 95 % des eingestrahlten Lichts beträgt.

Für das erfindungsgemässe Verfahren zur Herstellung einer planaren optischen Struktur zur Erzeugung einer Evaneszenzfeld-Messplattform und insbesondere auch zur Erzeugung eines planaren optischen Schichtwellenleiters gelten die gleichen Bevorzugungen wie vorangehend allgemein für das Verfahren zur Herstellung eines Körpers aus thermoplastischem Kunststoff mit dreidimensional strukturierter Oberfläche genannt.

Das Verfahren ist dadurch gekennzeichnet, dass bei dem Abformschritt auf der Oberfläche des "Masters" befindliche, als Reliefgitter ausgebildete Gitterstrukturen (c) oder (c') in die Oberfläche der Schicht (b) übertragen werden. Dieses bedeutet also, dass besagte als Reliefgitter ausgeprägte Gitterstrukturen (c) und / oder (c') in einer Oberfläche der Schicht (b) mittels Abformung von einem Master mit zu den Gitterstrukturen (c) bzw. (c') komplementären Oberflächen-Reliefgittern erzeugt werden.

Das erfindungsgemässe Herstellungsverfahren ermöglicht es auch, dass bei dem Abformschritt auf der Oberfläche des "Masters" ausgebildete erhabene Bereiche als Ausnehmungen in der Schicht (b) abgeformt werden. Vorzugsweise haben besagte Ausnehmungen in der Schicht (b) eine Tiefe von 20 µm bis 500 µm, bevorzugt von 50 µm bis 300 µm.

Insbesondere ist das erfindungsgemässe Herstellungsverfahren dadurch gekennzeichnet, dass Gitterstrukturen (c) und / oder (c') als Reliefgitter mit einer Tiefe von 3 nm bis 100 nm, bevorzugt von 10 nm bis 30 nm, und Ausnehmungen mit einer Tiefe von 20 µm bis 500 µm, bevorzugt von 50 µm bis 300 µm, gleichzeitig in einem einzigen Abformschritt abgeformt werden können.

Es wird bevorzugt, dass das in dem erfindungsgemässen Verfahren eingesetzte Abformmaterial, zur Erzeugung der im wesentlichen transparenten Schicht (b) besagter planarer optischer Struktur zur Erzeugung einer Evaneszentfeld-Messplattform, ein Material aus der Gruppe umfasst, die von Polycarbonaten, Polymethylmethacrylaten, Cyclo-Olefm-Polymeren und Cyclo-Olefin-Copolymeren gebildet wird. Besonders bevorzugt handelt es sich dabei um ein Material aus der Gruppe, die von Cyclo-Olefin-Polymeren und Cyclo-Olefin-Copolymeren gebildet wird.

Die Körper aus einem thermoplastischen Kunststoff mit einer dreidimensional strukturierten Oberfläche werden direkt von einem "Master" aus einem mit Metalloxid beschichteten Glas, ohne Aufbringung weiterer Beschichtungen auf der Oberfläche besagten "Masters", in einem erfindungsgemässen Herstellungsverfahren nach einer der genannten Ausführungsformen, abgeformt.

Die abgeformte Oberfläche des Körpers kann Strukturen mit Abmessungen von 1 nm - 1000 nm oder auch von 1 µm - 1000 µm haben. Insbsondere kann die abgeformte Oberfläche Strukturen mit Abmessungen von 1 nm - 1000 nm sowie von 1 µm bis 1000 µm umfassen, welche in einem einzigen Abformschritt abgeformt werden.

Der erfindungsgemässe Körper kann eine ausgedehnte dreidimensional strukturierte Oberfläche von mehr als 1 cm², bevorzugt von mehr als 10 cm², besonders bevorzugt von mehr als 100 cm², besitzen, welche in einem einzigen Abformschritt abgeformt wird.

Es wird bevorzugt, dass die Abformung des Körpers mittels eines Verfahrens erfolgt aus der Gruppe von Verfahren, welche Spritzguss ("Injection Molding"), "Reaction Injection Molding" (RIM), "Liquid Injection Molding" (LIM) und Heissprägung ("Hot Embossing") etc. umfasst. Besonders bevorzugt wird dabei ein Spritzgussverfahren, ganz besonders bevorzugt ein Variotherm-Spritzgussverfahren.

In einer bevorzugten Variante einer erfindungsgemässen planaren optischen Struktur zur Erzeugung einer Evaneszentfeld-Messplattform handelt es sich um eine planare optische Struktur zur Erzeugung einer Oberflächenplasmonenresonanz. Vorzugsweise umfasst diese planare optische Struktur eine Metallschicht aus Gold oder Silber.

Bevorzugt werden dabei Schichtdicken der Metallschicht zwischen 40 nm und 200 nm, besonders bevorzugt zwischen 40 nm und 100 nm. Es ist vorteilhaft, wenn ein mit der Metallschicht in Kontakt stehendes Material der Schicht (b) oder einer optionalen zusätzlichen dielektrischen Schicht ("buffer layer") einen niedrigen Brechungsindex n < 1.5, besonders bevorzugt n < 1.35, hat.

In einer anderen, besonders bevorzugten Ausführungsform einer erfindungsgemässen planaren optischen Struktur zur Erzeugung einer Evaneszentfeld-Messplattform handelt es sich um einen planaren optischen Schichtwellenleiter, umfassend eine erste, im wesentlichen optisch transparente, wellenleitende Schicht (a) mit Brechungsindex n₁ und eine zweite, im wesentlichen optisch transparente Schicht (b) mit Brechungsindex n₂, wobei n₁ > n₂, und wobei die zweite Schicht (b) besagten Schichtwellenleiters aus einem thermoplastischen Kunststoff besteht und direkt von einem "Master" aus einem mit Metalloxid beschichteten Glas, als Teil eines Abformwerkzeugs, ohne Aufbringung weiterer Beschichtungen auf der Oberfläche besagten "Masters", in einem erfindungsgemässen Herstellungsverfahren nach einer der genannten Ausführungsformen, abgeformt wird.

Die erfindungsgemässe planare optische Struktur zur Erzeugung einer Evaneszentfeld-Messplattform ist dadurch gekennzeichnet, dass bei dem Abformschritt auf der Oberfläche des "Masters" befindliche, als Reliefgitter ausgebildete Gitterstrukturen (c) oder (c') in die Oberfläche der Schicht (b) übertragen werden. Dieses bedeutet insbesondere, dass besagte als Reliefgitter ausgeprägte Gitterstrukturen (c) und / oder (c') in einer Oberfläche der Schicht (b) mittels Abformung von einem Master mit zu den Gitterstrukturen (c) bzw. (c') komplementären Oberflächen-Reliefgittern erzeugt werden.

Kennzeichen einer speziellen Ausführungsform der erfindungsgemässen planare optischen Struktur zur Erzeugung einer Evaneszentfeld-Messplattform ist, dass bei dem Abformschritt auf der Oberfläche des "Masters" ausgebildete erhabene Bereiche als Ausnehmungen in der Schicht (b) abgeformt werden. Dabei wird bevorzugt, dass besagte Ausnehmungen in der Schicht (b) eine Tiefe von 20 µm bis 500 µm, besonders bevorzugt von 50 µm bis 300 µm, haben.

Es wird ausserdem bevorzugt, dass die erfindungsgemässe planare optische Struktur zur Erzeugung einer Evaneszentfeld-Messplattform eine ausgedehnte dreidimensional strukturierte Oberfläche von mehr als 1 cm², bevorzugt von mehr als 10 cm², besonders bevorzugt von mehr als 100 cm², besitzt, welche in einem einzigen Abformschritt abgeformt wird.

Die Abformung der im wesentlichen optisch transparenten Schicht (b) einer erfindungsgemässen planaren optischen Struktur zur Erzeugung einer Evaneszentfeld-Messplattform kann mittels eines Verfahrens erfolgen aus der Gruppe von Verfahren, welche Spritzguss ("Injection Molding"), "Reaction Injection Molding" (RIM), "Liquid Injection Molding" (LIM) und Heissprägung ("Hot Embossing") etc. umfasst. Bevorzugt erfolgt die Abformung durch ein Spritzgussverfahren, besonders bevorzugt durch ein Variotherm-Spritzgussverfahren.

Planare optische Strukturen aus Mehrschichtsystemen,zur Erzeugung einer Evaneszentfeld-Messplattform, und insbesondere planare optische Schichtwellenleiter mit einer im wesentlichen optisch transparenten Schicht (b) aus Cyclo-Olefin-Polymeren oder Cyclo-Olefin-Copolymeren sind im Stand der Technik nicht bekannt, wie vorangehend festgestellt.

In einer bevorzugten Ausführungsform handelt es sich dabei um eine planare optische Struktur zur Erzeugung einer Oberflächenplasmonenresonanz: Vorzugsweise umfasst diese planare optische Struktur eine Metallschicht aus Gold oder Silber.

Eine andere bevorzugte Ausführungsform einer erfindungsgemässen planaren optischen Struktur zur Erzeugung einer Evaneszentfeld-Messplattform ist dadurch gekennzeichnet, dass es sich bei besagter Evaneszentfeld-Messplattform um einen planaren optischen Schichtwellenleiter handelt, umfassend eine erste, im wesentlichen optisch transparente, wellenleitende Schicht (a) mit Brechungsindex n₁ und eine zweite, im wesentlichen optisch transparente Schicht (b) mit Brechungsindex n₂, wobei n₁ > n₂, und wobei die zweite Schicht (b) besagten Schichtwellenleiters ein Material umfasst aus der Gruppe, die von Cyclo-Olefin-Polymeren und Cyclo-Olefin-Copolymeren gebildet wird.

Es wird weiterhin bevorzugt, dass der Brechungsindex der ersten optisch transparenten Schicht (a) grösser als 1.8 ist. Für die optische Schicht (a) sind eine Vielzahl von Materialien geeignet. Ohne Einschränkung der Allgemeinheit wird bevorzugt, dass die erste optisch transparente Schicht (a) ein Material aus der Gruppe von TiO₂, ZnO, Ob₂O₅, Ta₂O₅, HfO₂ oder ZrO₂, besonders bevorzugt aus TiO₂ oder Nb₂O₅ oder Ta₂O₅, umfasst.

Ein von einer äusseren Lichtquelle in Richtung der Schicht (a) (bzw. der Schicht (a')), d. h. sowohl durch die Schicht (b) in Richtung der Schicht (a) (bzw. der Metallschicht) als auch von der entgegengesetzten Seite, gegebenenfalls durch ein über der Schicht (a) (bzw. der Metallschicht) befindliches Medium in Richtung der Schicht (a) (bzw. der Metallschicht) eingestrahltes Licht, soll gemäss der vorliegenden Erfindung allgemein als ein "Anregungslicht" bezeichnet werden. Dieses Anregungslicht kann sowohl der Anregung einer Lumineszenz, oder spezifischer Fluoreszenz oder Phosphoreszenz, als auch einer Ramanstrahlung von zur Schicht (a) (bzw. zur Metallschicht) benachbarten Molekülen oder auch zur Einkopplung in die Schicht (a), zur Bestimmung der jeweiligen Koppelparameter, wie beispielsweise des Einkoppelwinkels, oder zur Anregung eines Oberflächenplasmons in einer Metallschicht, zur Bestimmung des Resonanzwinkels für die Oberflächenplasmonenresonanz, oder auch anderer Parameter, wie beispielsweise der Phasendifferenz des Lichts zwischen einem von einem Teilstrahl des Anregungslichts durchlaufenen, auf der Schicht (a) vorgesehenem Gebiet zum Nachweis eines oder mehrerer Analyten und einem von einem anderen Teilstrahl durchlaufenen Referenzgebiet, in einer interferometrischen Messanordnung, dienen.

Ausserdem wird bevorzugt, dass die wellenleitende Schicht (a) eines erfindungsgemässen planaren optischen Schichtwellenleiters, als einer bevorzugten Ausführungsform einer erfindungsgemässen planaren optischen Struktur zur Erzeugung einer Evaneszentfeld-Messplattform, sich in optischem Kontakt mit mindestens einem optischen Koppelelement zur Einkopplung von Anregungslicht einer oder mehrerer Wellenlängen, von ein oder mehr Lichtquellen, in die Schicht (a), befindet.

Es sind verschiedene Verfahren für die Einkopplung von Anregungslicht in einen planaren Wellenleiter bekannt. Die am frühesten benutzten Verfahren beruhten auf Stirnflächenkopplung oder Prismenkopplung, wobei zur Verminderung von Reflexionen infolge von Luftspalten im allgemeinen eine Flüssigkeit zwischen Prisma und Wellenleiter aufgebracht wird. Diese beiden Methoden sind vor allem in Verbindung mit Wellenleitern relativ grosser Schichtdicke, d. h. insbesondere selbsttragenden Wellenleitern, sowie bei einem Brechungsindex des Wellenleiters von deutlich unter 2 geeignet. Zur Einkopplung von Anregungslicht in sehr dünnschichtige, hochbrechende wellenleitende Schichten ist demgegenüber die Verwendung von Koppelgittern eine wesentlich elegantere Methode.

Es wird bevorzugt, dass, zur Einkopplung von Anregungslicht in die optisch transparente Schicht (a), diese Schicht in optischem Kontakt zu einem oder mehreren optischen Einkoppelelementen aus der Gruppe steht, die von Prismenkopplern, evaneszenten Kopplern mit zusammengebrachten optischen Wellenleitern mit überlappenden evaneszenten Feldern, Stirnflächenkopplern mit vor einer Stirnseite der wellenleitenden Schicht angeordneten fokussierenden Linsen, vorzugsweise Zylinderlinsen, und Gitterkopplern gebildet wird.

Besonders bevorzugt wird, dass die Einkopplung von Anregungslicht in die optisch transparente Schicht (a) mithilfe von einer oder mehreren Gitterstrukturen (c) erfolgt, die in der optisch transparenten Schicht (a) ausgeprägt sind.

Die Auskopplung von in der Schicht (a) geführtem Licht kann prinzipiell über gleichartige optische Koppelelemente, wie vorangehend zur Einkopplung genannt, erfolgen. Bevorzugt wird, dass die Auskopplung von in der optisch transparenten Schicht (a) geführtem Licht mithilfe von Gitterstrukturen (c') erfolgt, die in der optisch transparenten Schicht (a) ausgeprägt sind.

In der optisch transparenten Schicht (a) ausgeprägte Gitterstrukturen (c) und (c') können gleiche oder unterschiedliche Periode haben und parallel oder nicht parallel zueinander ausgerichtet sein. Im allgemeinen können Gitterstrukturen (c) und (c') wechselseitig als Ein- und / oder Auskoppelgitter verwendet werden.

Neben dem Brechungsindex der wellenleitenden optisch transparenten Schicht (a) ist deren Dicke der zweite massgebliche Parameter zur Erzeugung eines möglichst starken evaneszenten Feldes an deren Grenzflächen zu benachbarten Schichten mit niedrigerem Brechungsindex sowie einer möglichst hohen Energiedichte innerhalb der Schicht (a). Dabei nimmt die Stärke des evaneszenten Feldes mit abnehmender Dicke der wellenleitenden Schicht (a) zu, solange die Schichtdicke ausreicht, um mindestens einen Mode der Anregungswellenlänge zu führen. Dabei ist die minimale "Cut-off'-Schichtdicke zur Führung eines Modes abhängig von der Wellenlänge des zu führenden Lichts. Sie ist für längerwelliges Licht grösser als für kurzwelliges Licht. Mit Annäherung an die "Cut-off"-Schichtdicke nehmen allerdings auch ungewünschte Ausbreitungsverluste stark zu, was die Auswahl der bevorzugten Schichtdicke zusätzlich nach unten begrenzt. Bevorzugt sind solche Schichtdicken der optisch transparenten Schicht (a), welche nur die Führung von 1 bis 3 Moden einer vorgegebenen Anregungswellenlänge ermöglichen, ganz besonders bevorzugt sind Schichtdicken, welche zu monomodalen Wellenleitern für diese Anregungswellenlänge führen. Dabei ist klar, dass sich der diskrete Modencharakter des geführten Lichts nur auf die transversalen Moden bezieht.

Diese Anforderungen führen dazu, dass vorteilhaft das Produkt aus der Dicke der Schicht (a) und ihrem Brechungsindex ein Zehntel bis ein Ganzes, bevorzugt ein Drittel bis zwei Drittel, der Anregungswellenlänge eines in die Schicht (a) einzukoppelnden Anregungslichts beträgt.

Es wird ausserdem bevorzugt, dass die Gitterstrukturen (c) und / oder (c') Reliefgitter mit einer Tiefe der Gitterstrukturen von 3 bis 100 nm, besonders bevorzugt von 10 bis 30 nm sind. Vorteilhaft ist das Verhältnis von Modulationstiefe zur Dicke der ersten optisch transparenten Schicht (a) gleich oder kleiner als 0.2.

Die Höhe der Ausbreitungsverluste eines in einer optisch wellenleitenden Schicht (a) geführten Modes wird in hohem Masse von der Oberflächenrauhigkeit einer darunter liegenden Trägerschicht sowie von Absorption durch möglicherweise in dieser Trägerschicht vorhandene Chromophoren bestimmt, was zusätzlich das Risiko der Anregung von für viele Anwendungen unerwünschter Lumineszenz in dieser Trägerschicht, durch Eindringen des evaneszenten Feldes des in der Schicht (a) geführten Modes, in sich birgt. Weiterhin kann es zum Auftreten thermischer Spannungen infolge unterschiedlicher thermischer Ausdehnungskoeffizienten der optisch transparenten Schichten (a) und (b) kommen. Daher kann es von Vorteil sein, wenn sich zwischen den optisch transparenten Schichten (a) und (b) und in Kontakt mit Schicht (a) eine weitere optisch transparente Schicht (b') mit niedrigerem Brechungsindex als dem der Schicht (a) und einer Stärke von 5 nm - 10 000 nm, vorzugsweise von 10 nm- 1000 nm, befindet. Die Zwischenschicht hat die Aufgabe einer Verringerung der Oberflächenrauhigkeit unter der Schicht (a) oder der Verminderung des Eindringens des evaneszenten Feldes von in Schicht (a) geführtem Licht in die eine oder mehrere darunter liegende Schichten oder einer Verbesserung der Haftung der Schicht (a) auf der einen oder mehreren darunter liegenden Schichten oder der Verminderung von thermisch hervorgerufenen Spannungen innerhalb eines Schichtwellenleiters oder der chemischen Isolation der optisch transparenten Schicht (a) von darunter liegenden Schichten mittels Abdichten von Mikroporen in der Schicht (a) gegen darunter liegende Schichten.

Die nachfolgenden Bevorzugungen gelten wiederum nicht nur für einen erfindungsgemässen planaren optischen Schichtwellenleiter, sondern für den allgemeineren Erfindungsgegenstand einer planaren optischen Struktur, umfassend ein Mehrschichtsystem, zur Erzeugung einer Evaneszenzentfeld-Messplattform.

Besondere Ausführungsformen der erfindungsgemässen planaren optischen Struktur zur Erzeugung einer Evaneszentfeld-Messplattform sind dadurch gekennzeichnet, dass Gitterstrukturen (c) und / oder (c') grossflächig über ausgedehnte Oberflächenbereiche besagter optischer Struktur, bevorzugt über deren gesamte Oberfläche, ausgeprägt sind. Die erfindungsgemässe planare optische Struktur zur Erzeugung einer Evaneszentfeld-Messplattform kann auch eine Vielzahl von Gitterstrukturen (c) und / oder (c') auf einem gemeinsamen, durchgehenden Substrat, ausgeprägt in der im wesentlichen optisch transparenten Schicht (a) und / oder in der Metallschicht, umfassen.

Beispielsweise zur Einkopplung von Anregungslicht verschiedener Wellenlängen kann eine solche Ausführungsform vorteilhaft sein, welche dadurch gekennzeichnet ist, dass sie eine Überlagerung von 2 oder mehr Gitterstrukturen unterschiedlicher Periodizität mit zueinander paralleler oder nicht paralleler Ausrichtung der Gitterlinien umfasst.

Eine andere bevorzugte Ausführungsform ist dadurch gekennzeichnet, dass eine oder mehrere Gitterstrukturen (c) und / oder (c') eine im wesentlichen senkrecht zur Ausbreitungsrichtung des in die optisch transparente Schicht (a) eingekoppelten Anregungslichts oder des in der Metallschicht erzeugten Oberflächenplasmons räumlich variierende Periodiziät aufweisen. Derartige spezielle Ausführungsformen, am Beispiel von optischen Schichtwellenleitern', sind in der WO 92/19976 und in der WO 98/09156 beschrieben, wo sie auch als "integriert-optische Lichtzeiger" bezeichnet werden. Der Vorteil dieser Ausführungsform eines Gitterkopplers beruht darauf, dass die äussere Messgrösse des Resonanzwinkels zur Einkopplung eines von aussen auf das Einkoppelgitter eingestrahlten Anregungslichts umgesetzt wird in eine Ortsvariable auf der Gitter-Wellenleiter-Struktur, d.h., in die Bestimmung der Position auf dieser Struktur, an der die Resonanzbedingung aufgrund der geeigneten Periode des Koppelgitters erfüllt ist.

Zur Herstellung multidiffraktiver Gitterstrukturen oder von Gitterstrukturen mit räumlich variabler Periodizität oder anderen komplexen Gitterstrukturen in der wellenleitenden Schicht (a) (bzw. der Metallschicht) in grösseren Stückzahlen sind grundsätzlich planare optische Strukturen mit Plastiksubstraten (als im wesentlichen optisch transparente Schicht (b)) besser geeignet als solche mit Glassubstraten, da der Herstellungsprozess solcher komplexer Gitterstrukturen äusserst aufwendig ist. Er kann beispielsweise mittels Mehrfachbelichtung auf photolithographischem Wege, oder durch Strukturierung mittels Elektronenstrahl erfolgen. Entsprechend ist die Herstellung eines Masters, beispielsweise mit einem Glassubstrat, sehr kostspielig. Jedoch können dann von einem solchen Master nahezu beliebig viele Kopien von planaren optischen Strukturen basierend auf Plastiksubstraten abgeformt werden.

Für die meisten Anwendungen ist es erwünscht, Anregungslicht aus dem Spektrum zwischen dem nahen UV und dem nahen IR, also vorwiegend aus dem sichtbaren Spektrum, einzukoppeln. Dafür ist es vorteilhaft, wenn die Gitterstrukturen (c) und gegebenenfalls zusätzlich vorhandene Gitterstrukturen (c') eine Periode von 200 nm-1000 nm aufweisen.

Ausserdem ist es für die meisten Anwendungen erwünscht, dass die Koppelbedingungen über möglichst grosse Flächen sehr genau definiert sind und sich möglichst wenig ändern. Es wird daher für diese Anwendungen bevorzugt, dass der Resonanzwinkel zur Ein- oder Auskopplung eines monochromatischen Anregungslichts oder zur Anregung eines Oberflächenplasmons innerhalb einer Fläche einer Gitterstruktur von mindestens 4 mm² (mit Ausrichtung der Seiten parallel oder nicht parallel zu den Linien der Gitterstruktur (c)) oder über eine Strecke von mindestens 2 mm linienparallel um höchstens 0.1° (als Abweichung von einem Mittelwert) variiert.

Die Gitterstrukturen (c) und / oder (c') können Reliefgitter mit beliebigem Profil, beispielsweise mit Rechteck-, Dreieck- oder halbkreisförmigem Profil sein.

Bevorzugte Ausführungsformen der erfindungsgemässen planaren optischen Struktur zur Erzeugung einer Evaneszentfeld-Messplattform sind dadurch gekennzeichnet, dass besagte Gitterstrukturen (c) und / oder (c') in der der Schicht (a) bzw. der Metallschicht zugewandten Oberfläche der Schicht (b) als Reliefgitter ausgebildet sind und sich bei dem Herstellungsprozess besagten Schichtwellenleiters mindestens in die der Schicht (b) zugesandte Oberfläche (Schichtgrenze) der Schicht (a) bzw. der Metallschicht übertragen. Bei der Aufbringung nicht nur einer, sondern mehrerer Schichten übertragen sich in der der (später aufzubringenden) Schicht (a) bzw. der Metallschicht zugewandten Oberfläche der Schicht (b) ausgebildete Reliefgitter bei der Aufbringung weiterer Schichten auf dieser Oberfläche in die Oberflächen dieser weiteren aufgebrachten Schichten.

Für analytische Anwendungen werden generell solche Ausführungsformen eines erfindungsgemässen planaren optischen Schichtwellenleiters bevorzugt, welche dadurch gekennzeichnet sind, dass auf der Oberfläche der Schicht (a) bzw. der Metallschicht oder auf einer zusätzlich auf der Schicht (a) bzw. der Metallschicht aufgebrachten Haftvermittlungsschicht biologische oder biochemische oder synthetische Erkennungselemente zum qualitativen und / oder quantitativen Nachweis eines oder mehrerer Analyten in einer oder mehreren mit besagten Erkennungselementen in Kontakt gebrachten Proben aufgebracht sind.

Es gibt eine Vielzahl von Methoden zur Aufbringung der biologischen oder biochemischen oder synthetischen Erkennungselementen auf die optisch transparente Schicht (a) bzw. Metallschicht. Beispielsweise kann dieses durch physikalische Adsorption oder durch elektrostatische Wechselwirkung erfolgen. Die Orientierung der Erkennungselemente ist dann im allgemeinen statistisch. Ausserdem besteht die Gefahr, dass bei unterschiedlicher Zusammensetzung der den Analyten enthaltenden Probe oder der im Nachweisverfahren eingesetzten Reagentien ein Teil der immobilisierten Erkennungselemente fortgespült wird. Daher kann es von Vorteil sein, wenn zur Immobilisierung biologischer oder biochemischer oder synthetischer Erkennungselemente (e) auf der optisch transparenten Schicht (a) bzw. der Metallschicht eine Haftvermittlungsschicht (f) aufgebracht ist. Diese Haftvermittlungsschicht sollte im wesentlichen optisch transparent sein. Insbesondere sollte die Haftvermittlungsschicht nicht über die Eindringtiefe des evaneszenten Feldes aus der wellenleitenden Schicht (a) oder der Metallschicht in das darüber liegende Medium hinausragen. Daher sollte die Haftvermittlungsschicht (f) eine Stärke von weniger als 200 nm, vorzugsweise von weniger als 20 nm, haben. Sie kann beispielsweise chemische Verbindungen aus der Gruppe Silane, funktionalisierte Silane, Epoxide, funktionalisierte, geladene oder polare Polymere, Thiole, Dextrane und "selbstorganisierte passive oder funktionalisierte Mono- oder Mehrfachschichten" umfassen.

Um einen gleichzeitigen Nachweis einer Vielzahl, im allgemeinen unterschiedlicher, Analyten zu ermöglichen, wird bevorzugt, dass die biologischen oder biochemischen oder synthetischen Erkennungselemente in diskreten (räumlich getrennten) Messbereichen immobilisiert werden.

Im Sinne der vorliegenden Erfindung sollen diskrete (räumlich getrennte) Messbereiche durch die Fläche definiert werden, die dort immobilisierte biologische oder biochemische oder synthetische Erkennungselemente zur Erkennung eines oder mehrerer Analyten aus einer flüssigen Probe einnehmen. Diese Flächen können dabei eine beliebige Geometrie, beispielsweise die Form von Punkten, Kreisen, Rechtecken, Dreiecken, Ellipsen oder Streifen, haben. Dabei ist es möglich, durch räumlich selektive Aufbringung von biologischen oder biochemischen oder synthetischen Erkennungselementen auf dem optischen Schichtwellenleiter (entweder direkt auf der wellenleitenden Schicht (a) bzw. der Metallschicht oder auf einer auf der Schicht (a) bzw. der Metallschicht aufgebrachten Haftvermittlungsschicht) räumlich getrennte Messbereiche zu erzeugen. Im Kontakt mit einem Analyten oder eines mit dem Analyten um die Bindung an die immobilisierten Erkennungselemente konkurrierenden Analogen des Analyten oder eines weiteren Bindungspartners in einem mehrstufigen Assay werden diese Moleküle nur selektiv in den Messbereichen an die Oberfläche der planaren optischen Struktur binden, welche durch die Flächen definiert werden, die von den immobilisierten Erkennungselementen eingenommen werden. Es ist möglich, dass in einer 2-dimensionalen Anordnung bis zu 1 000 000 Messbereiche auf einer erfindungsgemässen planaren optischen Struktur zur Erzeugung einer Evaneszentfeld-Messplattform angeordnet sind, wobei ein einzelner Messbereich beispielsweise eine Fläche von 0.001 mm² - 6 mm² einnehmen kann. Typischerweise kann dabei die Dichte von Messbereichen mehr als 10, bevorzugt mehr als 100, besonders bevorzugt mehr als 1000 Messbereiche pro Quadratzentimeter auf der Oberfläche der Schicht (a) bzw. der Metallschicht oder auf einer zusätzlich auf der Schicht (a) bzw. der Metallschicht aufgebrachten Haftvermittlungsschicht betragen.

Zur räumlich selektiven Aufbringung der biologischen oder biochemischen oder synthetischen Erkennungselemente können eines oder mehrere Verfahren verwendet aus der Gruppe, die von "Ink jet spotting", mechanischem Spotting mittels Stift, Feder oder Kapillare, "Micro contact printing", fluidischer Kontaktierung der Messbereiche mit den biologischen oder biochemischen oder synthetischen Erkennungselementen durch deren Zufuhr in parallelen oder gekreuzten Mikrokanälen, unter Einwirkung von Druckunterschieden oder elektrischen oder elektromagnetischen Potentialen sowie photochemischen oder photolithographischen Immobilisierungsverfahren gebildet wird.

Für den industriellen Einsatz einer erfindungsgemässen planaren optischen Struktur zur Erzeugung einer Evaneszentfeld-Messplattform ist es von Vorteil, wenn zur Aufbringung der Erkennungselemente und / oder der Proben etablierte Laborroboter verwendet werden können. Diese Möglichkeit ist dann gegeben, wenn die Abmessungen der optischen Struktur mit den Dimensionen industrieller Standard-Mikrotiter-Platten kompatibel sind. Kommerziell erhältlich sind solche Platten mit 96 Wells (Ausnehmungen als Probenbehältnisse) in einem Abstand von ca. 9 mm, 384 Wells im Abstand von ca. 4.5 mm oder 1536 Wells im Abstand von ca. 2.25 mm. Daher wird bevorzugt, dass die Aussenmasse der Grundfläche einer erfindungsgemässen planaren optischen Struktur zur Erzeugung einer Evaneszentfeld-Messplattform mit der Grundfläche von Standard-Mikrotiter-Platten von ca. 8 cm x 12 cm (mit 96 oder 384 oder 1536 Wells) übereinstimmen.

Indem das Substrat (im wesentlichen optisch transparente Schicht (b)) einer erfindungsgemässen planaren optischen Struktur zur Erzeugung einer Evaneszentfeld-Messplattform durch Abformung von einem geeigneten Master strukturiert werden kann, ergibt sich die Möglichkeit, in diesem Substrat, vor der späteren Aufbringung der wellenleitenden Schicht (a) oder der Metallschicht, gleichzeitig mit der Abformung von Gitterstrukturen (c) oder (c') auch Ausnehmungen zur Erzeugung von Probenbehältnissen zu strukturieren, in denen dann, nach Aufbringung der weiteren Schichten, die diskreten (räumlich getrennten) Messbereiche mit den darin immobilisisierten Erkennungselementen erzeugt werden. Eine bevorzugte Ausführungsform einer erfindungsgemässen planaren optischen Struktur zur Erzeugung einer Evaneszentfeld-Messplattform ist daher dadurch gekennzeichnet, dass in der Schicht (b) Ausnehmungen zur Erzeugung von Probenbehältnissen strukturiert sind. Vorzugsweise haben diese Ausnehmungen eine Tiefe von 20 µm bis 500 µm, besonders bevorzugt von 50 µm bis 300 µm.

Ausserdem ist es vorteilhaft, wenn die planare optische Struktur zur Erzeugung einer Evaneszentfeld-Messplattform mechanisch und / oder optisch erkennbare Markierungen zur Erleichterung ihrer Justierung in einem optischen System und / oder zur Erleichterung der Verbindung besagter planarer optischer Struktur mit einem weiteren Körper zur Erzeugung eines oder mehrerer Probenbehältnisse umfasst.

Als biologische oder biochemische oder synthetische Erkennungselementen können Komponenten aus der Gruppe aufgebracht werden, die von Nukleinsäuren (beispielsweise DNA, RNA, Oligonukleotiden) und Nukleinsäureanalogen (z. B. PNA) sowie deren Derivaten mit künstlichen Basen, mono- oder polyklonalen Antikörpern und Antikörperfragmenten, Peptiden, Enzymen, Aptameren, synthetischen Peptidstrukturen, Glycopeptiden, Oligosacchariden, Lektinen, löslichen, membrangebundenen und aus einer Membran isolierten Proteinen wie beispielsweise Rezeptoren, deren Liganden, Antigenen für Antikörper (z. B. Biotin für Streptavidin), "Histidin-Tag-Komponenten" und deren Komplexbildungspartnern, durch chemische Synthese erzeugten Kavitäten zur Aufnahme molekularer Imprints, etc. gebildet wird.

Unter der letztgenannten Art von Erkennungselementen sind Kavitäten zu verstehen, die in einem Verfahren hergestellt werden, welches als "molecular imprinting" in der Literatur beschrieben wurde. Dazu wird, meistens in organischer Lösung, der Analyt oder ein Analogon des Analyten, in einer Polymerenstruktur eingekapselt. Man bezeichnet ihn dann als "Imprint". Dann wird der Analyt oder sein Analogon unter Zugabe geeigneter Reagentien aus der Polymerenstruktur wieder herausgelöst, so dass er dort eine leere Kavität zurücklässt. Diese leere Kavität kann dann als eine Bindungsstelle mit hoher sterischer Selektivität in einem späteren Nachweisverfahren eingesetzt werden.

Es ist auch möglich, dass als biochemische oder biologische Erkennungselemente ganze Zellen oder Zellfragmente aufgebracht werden.

In vielen Fällen wird die Nachweisgrenze eines analytischen Verfahrens limitiert durch Signale sogenannter unspezifischer Bindung, d. h. durch Signale, welche durch Bindung des Analyten oder anderer zum Nachweis des Analyten eingesetzter Verbindungen erzeugt werden, welche nicht nur im Bereich der eingesetzten immobilisierten biologischen oder biochemischen oder synthetischen Erkennungselemente, sondern auch in davon unbedeckten Bereichen der Oberfläche einer planaren optischen Struktur gebunden werden, beispielsweise durch hydrophobe Adsorption oder durch elektrostatische Wechselwirkungen. Daher ist es von Vorteil, wenn Bereiche zwischen den räumlich getrennten Messbereichen zur Minimierung unspezifischer Bindung von Analyten oder deren Nachweissubstanzen "passiviert werden", d.h. dass zwischen den räumlich getrennten Messbereichen gegenüber dem Analyten oder gegenüber einer seiner Nachweissubstanzen "chemisch neutrale" Verbindungen aufgebracht sind. Als "chemisch neutrale" Verbindungen werden dabei solche Stoffe bezeichnet, welche selbst keine spezifischen Bindungsstellen zur Erkennung und Bindung des Analyten oder eines Analogen des Analyten oder eines weiteren Bindungspartners in einem mehrstufigen Assay aufweisen und durch ihre Anwesenheit den Zugang des Analyten oder seines Analogen oder der weiteren Bindungspartner zur Oberfläche des Schichtwellenleiters blockieren.

Als "chemisch neutrale" Verbindungen können beispielsweise Stoffe aus den Gruppen eingesetzt werden, die von Albuminen, insbesondere Rinderserumalbumin oder Humanserumalbumin, Casein, unspezifischen, polyklonalen oder monoklonalen, artfremden oder empirisch für den oder die nachzuweisenden Analyten unspezifischen Antikörpern (insbesondere für Immunoassays), Detergentien - wie beispielsweise Tween 20 -, nicht mit zu analysierenden Polynukleotiden hybridisierender, fragmentierter natürlicher oder synthetischer DNA, wie beispielsweise ein Extrakt von Herings- oder Lachssperma (insbesondere für Polynukleotid-Hybridisierungsassays), oder auch ungeladenen, aber hydrophilen Polymeren, wie beispielsweise Polyethylenglycolen oder Dextranen, gebildet werden.

Insbesondere die Auswahl der genannten Stoffe zur Verminderung unspezifischer Hybridisierung in Polynukleotid-Hybridisierungsassays (wie beispielsweise Extrakte von Herings- oder Lachssperma) wird dabei durch die empirische Bevorzugung von für die zu analysierenden Polynukleotide "artfremder" DNA bestimmt, über die keine Wechselwirkungen mit den nachzuweisenden Polynukleotidsequenzen bekannt sind.

Weiterer Gegenstand der Erfindung ist ein analytisches System mit einer planaren optischen Struktur zur Erzeugung einer Evaneszentfeld-Messplattform, mit auf der Oberfläche der Schicht (a) bzw. der Metallschicht oder auf einer zusätzlich auf der Schicht (a) bzw. der Metallschicht aufgebrachten Haftvermittlungsschicht immobilisierten biologischen oder biochemischen oder synthetischen Erkennungselementen zum qualitativen und / oder quantitativen Nachweis eines oder mehrerer Analyten in einer oder mehreren mit besagten Erkennungselementen in Kontakt zu bringenden Proben, dadurch gekennzeichnet, dass die Oberseite besagter planarer optischer Struktur mit den darauf erzeugten Messbereichen über der optisch transparenten Schicht (a) oder der Metallschicht mit einem weiteren Körper derart zusammengebracht ist, dass zwischen der planaren optischen Struktur als Grundplatte und besagtem Körper eine oder mehrere räumliche Aussparungen zur Erzeugung eines oder mehrerer gegeneinander fluidisch abgedichteter Probenbehältnisse erzeugt werden, in denen jeweils ein oder mehrere Messbereiche oder Segmente oder Arrays von Messbereichen liegen.

Als ein Array von Messbereichen soll dabei eine ein- oder zweidimensionale Anordnung von Messbereichen bezeichnet werden, die gemeinsam mit derselben Probe in Kontakt gebracht werden. Innerhalb eines Probenbehältnisses können sich ein oder auch mehrere Arrays von Messbereichen befinden. Als Segment von Messbereichen soll eine Anordnung von zwei oder mehr Messbereichen bezeichnet werden, denen, aufgrund der Auswahl der darin immobilisierten Erkennungselemente, eine gemeinsame Funktion, beispielsweise zur Referenzierung oder zur Kalibration oder zum Nachweis gleicher Analyten, zugeordnet ist. Segmente von Messbereichen können Bestandteile eines Arrays von Messbereichen sein.

Eine bevorzugte Ausführungsform eines erfindungsgemässen analytischen Systems ist dadurch gekennzeichnet, dass die Probenbehältnisse als gegeneinander fluidisch abgedichtete Flusszellen mit jeweils mindestens einem Zulauf und mindestens einem Ablauf ausgebildet sind und gegebenenfalls zusätzlich mindestens ein Ablauf jeder Flusszelle in ein mit dieser Flusszelle fluidisch verbundenes Reservoir führt, welches aus der Flusszelle austretende Flüssigkeit aufnimmt.

Eine andere mögliche Ausführungsform ist dadurch gekennzeichnet, dass die Probenbehältnisse auf der den Messbereichen gegenüberliegenden Seite des mit der planaren optischen Struktur als Grundplatte zusammengebrachten Körpers offen sind.

Die Anordnung von Probenbehältnissen des erfindungsgemässen analytischen Systems kann 2 - 2000, vorzugsweise 2 - 400, besonders bevorzugt 2-100 einzelne Probenbehältnisse umfassen. Dabei wird bevorzugt, dass das Raster (Aufeinanderfolge in Zeilen und / oder Spalten) der Probenbehältnisse dem Raster der Wells einer Standardmikrotiterplatte entspricht. Die Probenbehältnisse können gleiche oder unterschiedliche Aufnahmevolumina von jeweils 0.1 nl-100µl haben.

Vorzugsweise umfasst das erfindungsgemässe analytische System ausserdem Zuführungsmittel, um die einen oder mehreren Proben mit den immobilisierten biologischen oder biochemischen oder synthetischen Erkennungselementen in Kontakt zu bringen.

Bevorzugt werden solche Ausführungsformen eines erfindungsgemässen analytischen Systems, welche dadurch gekennzeichnet sind, dass dieses zusätzlich mindestens eine Anregungslichtquelle zur Einstrahlung mindestens eines Anregungslichts auf eine planare optische Struktur zur Erzeugung einer Evaneszentfeld-Messplattform, nach einer der vorgenannten Ausführungsformen, und mindestens einen Detektor zur Detektion von besagter optischer Struktur ausgehenden Lichts umfasst.

Es können verschiedene Methoden zum Analytnachweis im evaneszenten Feld geführter Lichtwellen in optischen Schichtwellenleitern oder im evaneszenten Feld von in Metallfilmen erzeugten Oberflächenplasmonen unterschieden werden. Aufgrund des eingesetzten Messprinzips kann man beispielsweise zwischen Fluoreszenz- oder allgemeiner Lumineszenzmethoden auf der einen Seite und refraktiven Methoden andererseits unterscheiden. Hierbei können Verfahren zur Erzeugung einer Oberflächenplasmonenresonanz in einer dünnen Metallschicht auf einer dielektrischen Schicht mit niedrigerem Brechungsindex in die Gruppe der refraktiven Methoden mit einbezogen werden, sofern als Basis zur Bestimmung der Messgrösse der Resonanzwinkel des eingestrahlten Anregungslichts zur Erzeugung der Oberflächenplasmonenresonanz dient. Die Oberflächenplasmonenresonanz kann aber auch zur Verstärkung einer Lumineszenz oder zur Verbesserung des Signal-zu-Hintergrund-Verhältnisses in einer Lumineszenzmessung verwendet werden. Die Bedingungen zur Erzeugung einer Oberflächenplasmonenresonanz sowie zur Kombination mit Lumineszenzmessungen sowie mit wellenleitenden Strukturen sind vielfach in der Literatur beschrieben, beispielsweise in den US-Patenten Nr. 5,478,755, 5,841,143, 5,006,716 und 4,649,280.

Mit dem Begriff "Lumineszenz" wird in dieser Anmeldung die spontane Emission von Photonen im ultravioletten bis infraroten Bereich nach optischer oder nichtoptischer, wie beispielsweise elektrischer oder chemischer oder biochemischer oder thermischer Anregung, bezeichnet. Beispielsweise sind Chemilumineszenz, Biolumineszenz, Elektrolumineszenz und insbesondere Fluoreszenz und Phosphoreszenz unter dem Begriff "Lumineszenz" mit eingeschlossen.

Bei den refraktiven Messmethoden wird die Änderung des sogenannten effektiven Brechungsindex aufgrund molekularer Adsorption oder Desorption auf dem Wellenleiter zum Nachweis des Analyten benutzt. Diese Änderung des effektiven Brechungsindex wird, im Falle von Gitterkoppler-Sensoren, beispielsweise bestimmt aus der Änderung des Koppelwinkels für die Ein- oder Auskopplung von Licht in oder aus dem Gitterkoppler-Sensor, und im Falle von interferometrischen Sensoren aus der Änderung der Phasendifferenz zwischen dem in einem Sensorarm und einem Referenzarm des Interferometers geführten Messlichts. Im Falle der Oberflächenplasmonenresonanz wird beispielsweise die entsprechende Änderung des Resonanzwinkels zur Erzeugung eines Oberflächenplasmons gemessen. Sofern die verwendete Anregungslichtquelle über einen bestimmten Spektralbereich durchstimmbar ist, können anstelle der Änderung des Koppel- bzw. des Resonanzwinkels bei fest eingestelltem Einstrahlwinkel auch die Änderungen der Anregungswellenlänge, bei denen es zur Einkopplung in einen Gitterkoppler-Sensor bzw. zur Anregung eines Oberflächenplasmons kommt, gemessen werden. Die genannten refraktiven Methoden haben den Vorteil, dass sie ohne Verwendung zusätzlicher Markierungsmoleküle, sogenannter molekularer Labels, eingesetzt werden können. Allerdings sind sie im allgemeinen weniger empfindlich als solche Nachweismethoden, welche auf der Bestimmung von im evaneszenten Feld eines Wellenleiters angeregter Lumineszenz beruhen.

Im Falle von refraktiven Messverfahren erfolgt typischerweise die Detektion des Messlichts bei der Wellenlänge des Anregungslichts. Kennzeichen von Ausführungsformen des erfindungsgemässen analytischen Systems, welche insbesondere für refraktive Nachweisverfahren geeignet sind, ist daher, dass die Detektion von der planaren optischen Struktur zur Erzeugung einer Evaneszentfeld-Messplattform, als Bestandteil des analytischen Systems, ausgehenden Lichts bei der Wellenlänge eines eingestrahlten Anregungslichts erfolgt.

Während bei den bekannten Anordnungen von Gitterkoppler-Sensoren (siehe z. B.: K. Tiefenthaler, W. Lukosz,"Sensitivity of grating couplers as integrated-optical chemical sensors", J. Opt. Soc. Am. B6, 209 (1989); W. Lukosz, Ph.M. Nellen, Ch. Stamm, P. Weiss, "Output Grating Couplers on Planar Waveguides as Integrated, Optical Chemical Sensors", Sensors and Actuators B1, 585 (1990), und in T. Tamir, S.T. Peng, "Analysis and Design of Grating Couplers", Appl. Phys. 14, 235-254 (1977)) eine ortsaufgelöste Messung nicht möglich ist, wird in der PCT/EP 01/00605 eine solche Gitter-Wellenleiter-Struktur beschrieben, welche es ermöglicht, ortsaufgelöst Änderungen der Resonanzbedingungen zur Einkopplung eines Anregungslichts in die wellenleitende Schicht (a) eines optischen Schichtwellenleiters über eine in der Schicht (a) modulierte Gitterstruktur (c) oder zur Auskopplung eines in der Schicht (a) geführten Lichts, mit darauf erzeugten Arrays von Messbereichen mit jeweils unterschiedlichen immobilisierten biologischen oder biochemischen oder synthetischen Erkennungselementen zur gleichzeitigen Bindung und Bestimmung einer oder mehrerer Analyten, zu bestimmen, wobei besagtes Anregungslicht gleichzeitig auf ein ganzes Array von Messbereichen eingestrahlt wird und der Grad der Erfüllung der Resonanzbedingung für die Lichteinkopplung in die Schicht (a) zu besagten Messbereichen gleichzeitig gemessen wird. Auch die der vorliegenden Erfindung zugrunde liegenden planaren optischen Strukturen zur Erzeugung einer Evaneszentfeld-Messanordnung, insbesondere in der Ausführungsform planarer optischer Schichtwellenleiter, sind für derartige bildgebende refraktive Messmethoden geeignet. Die in der PCT/EP 01/00605 beschriebenen Ausführungsformen von planaren Schichtwellenleitern, als Gitter-Wellenleiter-Strukturen, sowie die ebenfalls beschriebenen optischen Systeme, als Bestandteil entsprechender erfindungsgemässer Ausführungsformen von analytischen Systemen, sowie die auf deren Einsatz beruhenden Verfahren zum Nachweis eines oder mehrerer Analyten sind daher ebenfalls Gegenstand der vorliegenden Erfindung.

Andere Ausführungsformen eines erfindungsgemässen analytischen Systems sind dadurch gekennzeichnet, dass die Detektion von besagter planarer optischer Struktur ausgehenden Lichts bei einer anderen Wellenlänge als derjenigen des eingestrahlten Anregungslichts erfolgt. Bevorzugt wird, dass die Detektion von besagter planarer optischer Struktur ausgehenden Lichts bei der Wellenlänge einer durch das Anregungslicht angeregten Lumineszenz erfolgt. Dabei ist die Wellenlänge der detektierten Lumineszenz im allgemeinen zu längeren Wellenlängen verschoben, im Vergleich zu der Wellenlänge des eingestrahlten Anregungslichts.

Zur Einkopplung von Anregungslicht in die optisch transparente Schicht (a) eines planaren optischen Schichtwellenleiters kann ein erfindungsgemässes analytisches System ein oder mehrere optische Einkoppelelemente aus der Gruppe umfassen, die von Prismenkopplern, evaneszenten Kopplern mit zusammengebrachten optischen Wellenleitern mit überlappenden evaneszenten Feldern, Stirnflächenkopplern mit vor einer Stirnseite der wellenleitenden Schicht angeordneten fokussierenden Linsen, vorzugsweise Zylinderlinsen, und Gitterkopplern gebildet wird. Es wird bevorzugt, dass die Einkopplung von Anregungslicht in die optisch transparente Schicht (a) mithilfe von einer oder mehreren Gitterstrukturen (c) erfolgt, die in der optisch transparenten Schicht (a) ausgeprägt sind, wobei das Anregungslicht unter einem solchen Winkelbereich auf die eine oder mehrere Gitterstrukturen, welche in der Schicht (a) ausgeprägt sind, eingestrahlt wird, welcher den Resonanzwinkel zur Einkopplung in die Schicht (a) über die eine oder die mehreren Gitterstrukturen umfasst. Entsprechend wird zur Erfüllung der Resonanzbedingungen zur Erzeugung eines Oberflächenplasmons in der Metallschicht einer erfindungsgemässen planaren optischen Struktur bevorzugt, dass die Anregung der Oberflächenplasmonenresonanz mithilfe einer oder mehreren Gitterstrukturen (c) erfolgt, die in der Metallschicht ausgeprägt sind, wobei das Anregungslicht unter einem solchen Winkelbereich auf die eine oder mehrere Gitterstrukturen, welche in der Metallschicht ausgeprägt sind, eingestrahlt wird, welcher den besagten Resonanzwinkel umfasst.

Vorzugsweise ist dabei ein eingestrahltes Anregungslicht jeweils im wesentlichen parallel und monochromatisch und wird unter dem Resonanzwinkel zur Einkopplung in die Schicht (a) oder zur Anregung des Oberflächenplasmons in der Metallschicht auf die eine oder mehrere in der Schicht (a) bzw. (a') ausgeprägte Gitterstrukturen eingestrahlt.

Die Auskopplung von in einer im wesentlichen optisch transparenten Schicht (a) geführtem Licht kann mithilfe von Gitterstrukturen (c') erfolgen, die in der Schicht (a) ausgeprägt sind.

Es wird bevorzugt, dass ein erfindungsgemässes analytisches System zusätzlich mindestens ein Positionierelement zur Veränderung des Winkels eines eingestrahlten Anregungslichts zwischen dessen Ausbreitungsrichtung im freien Raum, gekennzeichnet durch den entsprechenden k-Vektor, vor dem Auftreffen auf der Oberfläche einer planaren optischen Struktur, zur Erzeugung einer Evaneszentfeld-Messplattform, und dessen Projektion in die Ebene der Oberfläche besagter optischer Struktur, umfasst. Vorzugsweise umfasst ein erfindungsgemässes analytisches System ausserdem mindestens ein Positionierelement zur lateralen Veränderung des Auftreffortes eines eingestrahlten Anregungslichts auf besagter planarer optischer Struktur.

Eine spezielle Ausführungsform eines erfindungsgemässen analytischen Systems ist dadurch gekennzeichnet, dass dieses mindestens eine Aufweitungsoptik umfasst, mit der das Anregungslicht von mindestens einer Lichtquelle in einer Richtung, gegebenenfalls parallel zu den Gitterlinien einer in der Schicht (a) ausgeprägten Gitterstruktur zur Einkopplung von Anregungslicht in die Schicht (a) und / oder in zwei Raumrichtungen, gegebenenfalls parallel und senkrecht zu den Gitterlinien einer in der Schicht (a) ausgeprägten Gitterstruktur, aufgeweitet wird. Bevorzugt wird dabei, dass der Durchmesser eines eingestrahlten Anregungslichtbündels auf dem planaren optischen Schichtwellenleiter mindestens in einer Richtung in der Ebene der Oberfläche besagten Schichtwellenleiters mindestens 2 mm, bevorzugt mindestens 5 mm, beträgt. Diese letztgenanten speziellen Ausführungsformen eignen sich beispielsweise besonders gut zur Realisierung einer Anordnung eines bildgebenden Gitterkopplers, wie er in der PCT/EP 01/00605 beschrieben ist und in diese Erfindung vollumfänglich mit eingeführt wird.

Es wird bevorzugt, dass ein erfindungsgemässes analytisches System mindestens einen ortsauflösenden Detekor umfasst, welcher vorzugsweise ausgewählt ist aus der Gruppe von Detektoren, die von CCD-Kameras, CCD-Chips, Photodioden-Arrays, Avalanche-Dioden-Arrays, Multichannel-Plates und Vielkanal-Photomultipliem gebildet wird. Ausserdem werden solche Ausführungsformen eines erfindungsgemässen analytischen Systems bevorzugt, welche dadurch gekennzeichnet sind, dass zwischen der einen oder mehreren Anregungslichtquellen und der erfindungsgemässen planaren optischen Struktur zur Erzeugung einer Evaneszentfeld-Messplattform und / oder zwischen besagter planarer optischer Struktur und dem einen oder mehreren Detektoren optische Komponenten aus der Gruppe verwendet werden, die von Linsen oder Linsensystemen zur Formgestaltung der übertragenen Lichtbündel, planaren oder gekrümmten Spiegeln zur Umlenkung und gegebenenfalls zusätzlich zur Formgestaltung von Lichtbündeln, Prismen zur Umlenkung und gegebenenfalls zur spektralen Aufteilung von Lichtbündeln, dichroischen Spiegeln zur spektral selektiven Umlenkung von Teilen von Lichtbündeln, Neutralfiltem zur Regelung der übertragenen Lichtintensität, optischen Filtern oder Monochromatoren zur spektral selektiven Übertragung von Teilen von Lichtbündeln oder polarisationsselektiven Elementen zur Auswahl diskreter Polarisationsrichtungen des Anregungs- oder Lumineszenzlichts gebildet werden.

Es ist möglich, dass die Einstrahlung des Anregungslichts in Pulsen mit einer Dauer zwischen 1 fsec und 10 Minuten erfolgt und das von der planaren optischen Struktur ausgehende Licht zeitlich aufgelöst gemessen wird. Insbesondere kann mit einer solchen Ausführungsform auch die Bindung einer oder mehrerer Analyten an die Erkennungselemente in den verschiedenen Messbereichen ortsaufgelöst in Echtzeit beobachtet werden. Aus den zeitaufgelöst aufgenommenen Signalen kann die jeweilige Bindungskinetik bestimmt werden. Insbesondere ermöglicht dieses beispielsweise den Vergleich der Affinitäten unterschiedlicher Liganden zu einem jeweiligen immobilisierten biologischen oder biochemischen oder synthetischen Erkennungselement. Dabei soll in diesem Zusammenhang als "Ligand" ein beliebiger Bindungspartner eines solchen immobilisierten Erkennungselements bezeichnet werden.

Es wird bevorzugt, dass ein erfindungsgemässes analytisches System Vorkehrungen umfasst, welche es ermöglichen, von einem erfindungsgemässen planaren optischen Schichtwellenleiter und gegebenenfalls darauf befindlichen Messbereichen (1) im wesentlichen isotrop abgestrahltes Licht oder (2) in die optisch transparente Schicht rückgekoppeltes und über in der Schicht (a) ausgeprägte Gitterstrukturen ausgekoppeltes Licht oder Licht beider Anteile (1) und (2) zu messen.

Eine spezielle Ausführungsform eines erfindungsgemässen analytischen Systems ist dadurch gekennzeichnet, dass dieses Vorkehrungen umfasst, welche es ermöglichen, dass Einstrahlung des Anregungslichts und die Detektion des von einem oder mehreren Messbereichen ausgehenden Lichts sequentiell für einzelne oder mehrere Messbereiche erfolgen.

Diese Vorkehrungen können darin bestehen, dass sequentielle Anregung und Detektion unter Verwendung beweglicher optischer Komponenten erfolgt, die aus der Gruppe von Spiegeln, Umlenkprismen und dichroischen Spiegeln gebildet wird.

Bestandteil der Erfindung ist auch ein solches System, welches dadurch gekennzeichnet ist, dass sequentielle Anregung und Detektion unter Verwendung eines im wesentlichen winkel- und fokusgetreuen Scanners erfolgt. Ausserdem ist es möglich, dass die planare optische Struktur zwischen Schritten der sequentiellen Anregung und Detektion bewegt wird.

Weiterer Gegenstand der Erfindung ist ein Verfahren zum qualitativen und/oder quantitativen Nachweis eines oder mehrerer Analyten in einer oder mehreren Proben, dadurch gekennzeichnet, dass besagte Proben mit biologischen oder biochemischen oder synthetischen Erkennungselementen in Kontakt gebracht werden, welche, direkt oder vermittelt über eine Haftvermittlungsschicht, auf der Oberfläche einer erfindungsgemässen planaren optischen Struktur zur Erzeugung einer Evaneszentfeld-Messplattform, nach einer der genannten Ausführungsformen, immobilisiert sind und dass Änderungen zur Einkopplung eines eingestrahlten Anregungslichts in einer wellenleitende Schicht (a) eines planaren optischen Schichtwellenleiters und / oder zur Auskopplung des von besagtem Schichtwellenleiters ausgehenden Lichts oder zur Erzeugung eines Oberflächenplasmons in einer Metallschicht, infolge der Bindung eines oder mehrerer Analyten oder eines seiner Bindungspartner an eine oder mehrere immobilisierte Erkennungselemente, gemessen werden.

Es wird bevorzugt, dass die biologischen oder biochemischen oder synthetischen Erkennungselemente in diskreten Messbereichen immobilisiert sind.

Ausserdem wird bevorzugt, dass die Einkopplung von Anregungslicht in die wellenleitende Schicht (a) oder die Erzeugung eines Oberflächenplasmons in der Metallschicht mithilfe einer oder mehrerer Gitterstukturen (c) erfolgt, welche in der Schicht (a) bzw. der Metallschicht ausgeprägt sind.

Bestimmte Ausführungsformen des erfindungsgemässen Verfahrens sind dadurch gekennzeichnet, dass der Nachweis eines oder mehrerer Analyten anhand von Änderungen des effektiven Brechungsindex, infolge der Bindung besagten Analyts und gegebenenfalls eines seiner Bindungspartner, an biologische oder biochemische oder synthetische Erkennungselemente, welche auf einer in der Schicht (a) bzw. der Metallschicht ausgeprägten Gitterstruktur immobilisiert sind, und anhand der daraus resultierenden Änderungen der Resonanzbedingungen zur Einkopplung von Anregungslicht in die Schicht (a) oder zur Erzeugung eines Oberflächenplasmons in der Metallschicht mithilfe besagter Gitterstruktur erfolgt.

Kennzeichen anderer Ausführungsformen des Verfahrens ist, dass der Nachweis eines oder mehrerer Analyten anhand von Änderungen der Bedingungen zur Auskopplung eines in der Schicht (a) geführten Lichts über eine in der Schicht (a) ausgeprägte Gitterstruktur (c) oder (c'), infolge der Bindung besagten Analyts und gegebenenfalls eines seiner Bindungspartner an biologische oder biochemische oder synthetische Erkennungselemente, welche auf der Gitterstruktur immobilisiert sind, und der damit verbundenen Änderungen des effektiven Brechungsindex erfolgt.

Ein weiterer bevorzugter Gegenstand der Erfindung ist ein Verfahren zum qualitativen und / oder quantitativen Nachweis eines oder mehrerer Analyten in einer oder mehreren Proben, dadurch gekennzeichnet, dass besagte Proben mit biologischen oder biochemischen oder synthetischen Erkennungselementen in Kontakt gebracht werden, welche direkt oder vermittelt über eine Haftvermittlungsschicht auf der Oberfläche einer erfindungsgemässen planaren optischen Struktur zur Erzeugung einer Evaneszentfeld-Messplattform nach einer der genannten Ausführungsformen immobilisiert sind, dass Anregungslicht von einer oder mehreren Lichtquellen in die Schicht (a) eingekoppelt und in dieser geführt wird, und dass im Nahfeld der Schicht (a) die Lumineszenz von lumineszenzfähigen Molekülen, welche an den Analyten oder einen seiner Bindungspartner gebunden sind, angeregt und gemessen wird.

Die zweite optisch transparente Schicht (b) umfasst ein Material aus der Gruppe, die von Cyclo-Olefin-Polymeren und Cyclo-Olefin-Copolymeren gebildet wird.

Dieses erfindungsgemässe Verfahren ermöglicht es, dass (1) die isotrop abgestrahlte Lumineszenz oder (2) in die optisch transparente Schicht (a) eingekoppelte und über eine Gitterstruktur (c) oder (c') ausgekoppelte Lumineszenz oder Lumineszenzen beider Anteile (1) und (2) gleichzeitig gemessen werden.

Es wird bevorzugt, dass zur Erzeugung der Lumineszenz ein Lumineszenzfarbstoff oder lumineszentes Nanopartikel als Lumineszenzlabel verwendet wird, das bei einer Wellenlänge zwischen 300 nm und 1100 nm angeregt werden kann und emittiert.

Das Lumineszenzlabel kann an den Analyten oder in einem kompetitiven Assay an einen Analogen des Analyten oder in einem mehrstufigen Assay an einen der Bindungspartner der immobilisierten biologischen oder biochemischen oder synthetischen Erkennungselementen oder an die biologischen oder biochemischen oder synthetischen Erkennungselemente gebunden sein.

Kennzeichen spezieller Ausführungsformen des erfindungsgemässen Verfahrens ist, dass ein zweites oder noch weitere Lumineszenzlabel mit gleicher oder unterschiedlicher Anregungswellenlänge wie das erste Lumineszenzlabel und gleicher oder unterschiedlicher Emissionswellenlänge verwendet werden. Derartige Ausführungsformen können, durch entsprechende Auswahl der spektralen Charakteristiken der eingesetzten Lumineszenzlabel, so ausgestaltet sein, dass das zweite oder noch weitere Lumineszenzlabel bei der gleichen Wellenlänge wie das erste Lumineszenzlabel angeregt werden kann, aber bei anderen Wellenlängen emittieren.

Für bestimmte Anwendungen, beispielsweise für voneinander unabhängige Messungen bei unterschiedlichen Anregungs- und Detektionslabeln, ist es vorteilhaft, wenn die Anregungsspektren und Emissionsspektren der eingesetzten Lumineszenzfarbstoffe nur wenig oder gar nicht überlappen.

Eine andere, spezielle Ausführungsform des Verfahrens ist dadurch gekennzeichnet, dass zum Nachweis der Analyten Ladungs- oder optischer Energietransfer von einem als Donor dienenden ersten Lumineszenzlabel zu einem als Akzeptor dienenden zweiten Lumineszenzlabel verwendet wird.

Kennzeichen einer anderen speziellen Ausführungsform des erfindungsgemässen Verfahrens ist, dass neben der Bestimmung einer oder mehrerer Lumineszenzen Änderungen des effektiven Brechungsindex auf den Messbereichen bestimmt werden.

Vorteilhaft ist, wenn die einen oder mehreren Lumineszenzen und / oder Bestimmungen von Lichtsignalen bei der Anregungswellenlänge polarisationsselektiv vorgenommen werden. Insbesondere wird bevorzugt, dass die einen oder mehreren Lumineszenzen bei einer anderen Polarisation als der des Anregungslichts gemessen werden.

Das erfindungsgemässe Verfahren ist dadurch gekennzeichnet, dass die zu untersuchenden Proben wässrige Lösungen, insbsondere Pufferlösungen oder natürlich vorkommende Körperflüssigkeiten wie Blut, Serum, Plasma, Urin oder Gewebeflüssigkeiten sind. Bei einer zu untersuchenden Probe kann es sich auch um eine optisch trübe Flüssigkeit, Oberflächenwasser, einen Boden- oder Pflanzenextrakt, eine Bio- oder Syntheseprozessbrühe handeln. Die zu untersuchenden Proben können auch aus biologischen Gewebeteilen oder Zellen präpariert sein.

Ein weiterer Gegenstand der Erfindung ist die Verwendung einer erfindungsgemässen planaren optischen Struktur zur Erzeugung einer Evaneszentfeld-Messplattform nach einer der genannten Ausführungsformen und / oder eines erfindungsgemässen analytischen Systems und / oder eines erfindungsgemässen Verfahrens zum Nachweis eines oder mehrerer Analyten zu quantitativen oder qualitativen Analysen zur Bestimmung chemischer, biochemischer oder biologischer Analyten in Screeningverfahren in der Pharmaforschung, der Kombinatorischen Chemie, der Klinischen und Präklinischen Entwicklung, zu Echtzeitbindungsstudien und zur Bestimmung kinetischer Parameter im Affinitätsscreening und in der Forschung, zu qualitativen und quantitativen Analytbestimmungen, insbesondere für die DNA- und RNA-Analytik, für die Erstellung von Toxizitätsstudien sowie für die Bestimmung von Gen- oder Protein-Expressionsprofilen sowie zum Nachweis von Antikörpern, Antigenen, Pathogenen oder Bakterien in der pharmazeutischen Protduktentwicklung und -forschung, der Human- und Veterinärdiagnostik, der Agrochemischen Produktentwicklung und -forschung, der symptomatischen und präsymptomatischen Pflanzendiagnostik, zur Patientenstratifikation in der pharmazeutischen Produktentwicklung und für die therapeutische Medikamentenauswahl, zum Nachweis von Pathogenen, Schadstoffen und Erregern, insbesondere von Salmonellen, Prionen, Viren und Bakterien, in der Lebensmittel- und Umweltanalytik.

Die Erfindung wird in den nachfolgenden Ausführungsbeispielen exemplarisch erläutert.

### Beispiele

### 1. Master:

Das "Master" wird aus einem planaren Dünnschichtwellenleiter ("Chip"), bestehend aus einem Substrat aus AF 45 Glas, mit den Abmessungen 16 mm x 48 mm x 0.7 mm, und einer Beschichtung aus Tantalpentoxid (150 nm dick) als wellenleitender Schicht, gewonnen. Parallel zu der kurzen Seite des "Chips" sind, zur Einkopplung von Anregungslicht in die wellenleitende Schicht, Reliefgitter, mit einer Periode von 320 nm, Tiefe von 12 nm und einer Länge (in Ausbreitungsrichtung des geführten Lichts, d.h. parallel zur Längsseite des "Chips") von 0.5 mm, im Abstand von 9 mm strukturiert.

Aus dem "Chip" wird ein 12 mm x 25 mm grosses Teilstück derart ausgeschnitten, dass darauf 3 Gitter mit Gitterlinien linienparallel zu der kurzen Kante des Teilstücks strukturiert sind.

### 2. Verfahren zur Herstellung eines Körpers aus einem thermoplastischen Kunststoff / Verfahren zur Herstellung eines erfindungsgemässen planaren optischen Schichtyvellenleiters

Es werden Abformungen des unter 1. beschriebenen Masters in den folgenden Kunststoffen hergestellt: 1.Polycarbonat (PC), 2. Polymethylmethacrylat (PMMA), 3. Cyclo-Olefin-Copolymer (COC), 4. Cyclo-Olefin-Polymer (COP).

Das Master wird eingefügt in ein Abformwerkzeug. Die Abformung erfolgt nach dem Variotherm-Spritzgussverfahren (A. Rogalla, "Analyse des Spritzgießens mikrostrukturierter Bauteile aus Thermoplasten", IKV Berichte aus der Kunststoffverarbeitung, Band 76, Verlag Mainz, Wissenschaftsverlag Aachen, Deutschland, 1998):

Das Abformwerkzeug, mit dem darin integrierten "Master", wird geschlossen, so dass sich darin eine Kavität als "Formnest" ergibt, und auf die Schmelztemperatur (Abformtemperatur, bis 180°C für PC, bis 140°C für PMMA, bis 180°C für COC und bis 170°C für COP) aufgeheizt. Dann fährt das Einspritzaggregat bis zum Formnest vor, welches gleichzeitig evakuiert wird bis zu einem Restdruck zwischen 10 mbar und 300 mbar.

Dann wird der Kunststoff mit einem Druck von 800 bar - 1800 bar im Falle von PC, 600 bar - 1200 bar im Falle von PMMA, 500 bar- 1500 bar im Falle von COC sowie 500 bar -1800 bar im Falle von COP eingespritzt. Nach Füllung der Kavität wird die Heizung abgestellt, und es beginnt die Abkühlung auf Entformungstemperatur (100°C -140°C für PC, 70°C - 100°C für PMMA, 70°C - 160°C für COC und 80°C -140°C für COP, jeweils formteilspezifisch).

Noch vor Verfestigung der eingespritzen Kunststoffphase erfolgt der Nachdruck (600 bar - 1200 bar für PC, 400 bar - 600 bar für PMMA, 300 bar - 500 bar für COC und 500 bar - 1500 bar für COP), um der Materialschrumpfung beim Abkühlen entgegenzuwirken.

Dann fährt das Einpritzaggregat zurück, und die Kavität (Formnest) wird belüftet.

Zur Vorbereitung des nächsten Einspritzvorgangs wird neues Kunststoff-Granulat dosiert und für den nächsten Spritzvorgang plastifiziert. Das Einspritzwerkzeug wird geöffnet, und die abgeformte Plastikstruktur wird ausgeworfen.

Damit ist die Maschine bereit für den Start des nächsten Einspritz-Zyklus.

## Patentansprüche

1. Verfahren zur Herstellung einer planaren optischen Struktur geeignet zur Erzeugung einer Evaneszentfeld-Messplattform, wobei die besagte planare optische Struktur ein Mehrschichtsystem umfasst, mit:
- einer Metallschicht und / oder einer optisch transparenten, wellenleitenden Schicht mit Brechungsindex n₁ und
- mindestens einer zweiten, optisch transparenten Schicht mit Brechungsindex n₂, wobei n₁ > n₂, und wobei die zweite schicht aus einem thermoplastichen Kunststoff besteht
- **dadurch gekennzeichnet, dass** die zweite Schicht ein Material aus der Gruppe umfasst, die von Cyclo-Olefin-Polymeren und Cyclo-Olefin-Copolymeren gebildet wird, und
direkt von einer Vorlage aus einem mit Metalloxid beschichteten Glas, als Teil eines Abformwerkzeugs, ohne Aufbringung weiterer Beschichtungen auf der Oberfläche besagter Vorlage, abgeformt wird.

2. Verfahren nach Anspruch 1, **dadurch gekennzeichnet, dass** es sich bei besagter Evaneszentfeld-Messplattform um eine planare optische Struktur zur Erzeugung einer Oberflächenplasmonenresonanz handelt.

3. Verfahren nach Anspruch 1, **dadurch gekennzeichnet, dass** es sich bei besagter Evaneszentfeld-Messplattform um einen planaren optischen Schichtwellenleiter handelt, umfassend eine erste, im wesentlichen optisch transparente, wellenleitende Schicht mit Brechungsindex n₁ und eine zweite, im wesentlichen optisch transparente Schicht mit Brechungsindex n₂, wobei n₁ > n₂ ist.

4. Herstellungsverfahren nach einem der Ansprüche 1 - 3, **dadurch gekennzeichnet, dass** die Vorlage ein Material aus der Gruppe von Materialien umfasst, die von TiO₂, ZnO, Nb₂O₅, Ta₂O₅, HfO₂, oder ZrO₂ gebildet wird, wobei TiO₂, Ta₂O_{S} oder Nb₂O₅ besonders bevorzugt werden.

5. Herstellungsverfahren nach einem der Ansprüche 1 - 4, **dadurch gekennzeichnet, dass** bei dem Abformschritt auf der Oberfläche der Vorlage befindliche, als Reliefgitter ausgebildete Gitterstrukturen in die Oberfläche der zweiten Schicht übertragen werden.

6. Herstellungsverfahren nach Anspruch 5, **dadurch gekennzeichnet, dass** besagte als Reliefgitter ausgeprägte Gitterstrukturen in einer Oberfläche der zweiten Schicht mittels Abformung von einer Vorlage mit zu den Gitterstrukturen komplementären Oberflächen-Reliefgittern erzeugt werden.

7. Herstellungsverfahren nach einem der Ansprüche 1 - 4, **dadurch gekennzeichnet, dass** bei dem Abformschritt auf der Oberfläche der Vorlage ausgebildete erhabene Bereiche als Ausnehmungen in der zweiten Schicht abgeformt werden.

8. Herstellungsverfahren nach Anspruch 7, **dadurch gekennzeichnet, dass** besagte Ausnehmungen in der zweiten Schicht eine Tiefe von 20 µm bis 500 µm, bevorzugt von 50 µm bis 300 µm haben.

9. Herstellungsverfahren nach einem der Ansprüche 1 - 8, **dadurch gekennzeichnet, dass** Gitterstrukturen als Reliefgitter mit einer Tiefe von 3 nm bis 100 nm, bevorzugt von 10 nm bis 30 nm, und Ausnehmungen mit einer Tiefe von 20 µm bis 500 µm, bevorzugt von 50 µm bis 300 µm, gleichzeitig in einem einzigen Abformschritt abgeformt werden.

10. Herstellungsverfahren nach einem der Ansprüche 1 - 9 **dadurch gekennzeichnet, dass** die Abformung mittels eines Verfahrens erfolgt aus der Gruppe von Verfahren, welche Spritzguss, Reaktionsspritzguss, Flüssigkeitsspritzguss und Heissprägung umfasst.

11. Herstellungsverfahren nach einem der Ansprüche 1 - 10, **dadurch gekennzeichnet, dass** die Abformung mittels eines Spritzgussverfahrens erfolgt.

12. Herstellungsverfahren nach Anspruch 11, **dadurch gekennzeichnet, dass** die Abformung mittels eines Variotherm-Spritzgussverfahrens erfolgt.

13. Planare optische Struktur geeignet zur Erzeugung einer Evaneszentfeld-Messplattform, umfassend ein Mehrschichtsystem mit:
- einer Metallschicht und / oder einer optisch transparenten, wellenleitenden ersten Schicht mit Brechungsindex n₁ und
- mindestens einer zweiten, optisch transparenten Schicht mit Brechungsindex n₂, wobei n₁ > n₂, wobei die zweite schicht aus einem thermoplastichen Kunststoff besteht
**dadurch gekennzeichnet, dass** die zweite Schicht ein Material aus der Gruppe umfasst, die von Cyclo-Olefin-Polymeren und Cyclo-Olefin-Copolymeren gebildet wird und direkt von einer Vorlage, als Teil eines Abformwerkzeugs, abgeformt ist, wobei bei dem Abformschritt auf der Oberfläche der Vorlage befindliche, als Reliefgitter ausgebildete Gitterstrukturen in der Oberfläche der zweiten Schicht übertragen sind.

14. Planare optische Struktur gemäß Anspruch 13, hergestellt durch das Verfahren gemäß einem der Ansprüche 1 bis 12.

15. Planare optische Struktur geeignet zur Erzeugung einer Evaneszentfeld-Messplattform nach Anspruch 13, **dadurch gekennzeichnet, dass** es sich bei besagter Evaneszentfeld-Messplattform um eine planare optische Struktur zur Erzeugung einer Oberflächenplasmonenresonanz handelt.

16. Planare optische Struktur geeignet zur Erzeugung einer Evaneszentfeld-Messplattform nach Anspruch 13, **dadurch gekennzeichnet, dass** es sich bei besagter Evaneszentfeld-Messplattform um einen planaren optischen Schichtwellenleiter handelt, umfassend eine erste, optisch transparente, wellenleitende erste Schicht mit Brechungsindex n₁, und eine zweite, optisch transparente zweite Schicht mit Brechungsindex n₂, wobei n₁, > n₂.

17. Planare optische Struktur geeignet zur Erzeugung einer Evaneszentfeld-Messplattform nach einem der Ansprüche 13-16, **dadurch gekennzeichnet, dass** besagte als Reliefgitter ausgeprägte Gitterstrukturen in einer Oberfläche der zweiten Schicht mittels Abformung von einer Vorlage mit zu den Gitterstrukturen komplementären Oberflächen-Reliefgittern erzeugt werden.

18. Planare optische Struktur geeignet zur Erzeugung einer Evaneszentfeld-Messplattform nach einem der Ansprüche 13-17, **dadurch gekennzeichnet, dass** Ausnehmungen in der zweiten Schicht vorhanden sind.

19. Planare optische Struktur geeignet zur Erzeugung einer Evaneszentfeld-Messplattform nach Anspruch 18, **dadurch gekennzeichnet, dass** besagte Ausnehmungen in der zweiten Schicht eine Tiefe von 20 µm bis 500 µm, bevorzugt von 50 µm bis 300 µm haben.

20. Planare optische Struktur geeignet zur Erzeugung einer Evaneszentfeld-Messplattform nach einem der Ansprüche 13-17, **dadurch gekennzeichnet, dass** ihre Oberfläche Gitterstrukturen als Reliefgitter mit einer Tiefe von 3 nm bis 100 nm, bevorzugt von 10 nm bis 30 nm, und Ausnehmungen mit einer Tiefe von 20 µm bis 500 µm, bevorzugt von 50 µm bis 300 µm, umfasst, welche gleichzeitig in einem einzigen Abformschritt abgeformt werden kann.

21. Planare optische Struktur geeignet zur Erzeugung einer Evaneszentfeld-Messplattform nach einem der Ansprüche 13-20, **dadurch gekennzeichnet, dass** sie eine ausgedehnte dreidimensional strukturierte Oberfläche von mehr als 1 cm², bevorzugt von mehr als 10 cm², besonders bevorzugt von mehr als 100 cm², besitzt, welche in einem einzigen Abformschritt abgeformt werden kann.

22. Planare optische Struktur geeignet zur Erzeugung einer Evaneszentfeld-Messplattform nach einem der Ansprüche 16-21, **dadurch gekennzeichnet, dass** die planare optische Struktur ein planarer optischer Schichtwellenleiter ist und der Brechungsindex der ersten optisch transparenten Schicht grösser als 1.8 ist.

23. Planare optische Struktur geeignet zur Erzeugung einer. Evaneszentfeld-Messplattform nach einem der Ansprüche 16-22, **dadurch gekennzeichnet, dass** die erste optisch transparente Schicht aus TiO₂. ZnO, Nb₂O₅, Ta₂O₅, HfO₂, oder ZrO₂. besonders bevorzugt aus TiO₂ und Ta₂O₅ besteht.

24. Planare optische Struktur geeignet zur Erzeugung einer Evaneszentfeld-Messplattform nach einem der Ansprüche 16-20 oder 22-23, **dadurch gekennzeichnet, dass** die wellenleitende erste Schicht sich in optischem Kontakt mit mindestens einem optischen Koppelelement zur Einkopplung von Anregungslicht einer oder mehrerer Wellenlängen, von ein oder mehr Lichtquellen, in die erste Schicht, befindet.

25. Planare optische Struktur geeignet zur Erzeugung einer Evaneszentfeld-Messplattform nach Anspruch 24, **dadurch gekennzeichnet, dass**, zur Einkopplung von Anregungslicht in die optisch transparente erste Schicht, diese Schicht in optischem Kontakt zu einem oder mehreren optischen Einkoppelelemente aus der Gruppe steht, die von Prismenkopplern, evaneszenten Kopplern mit zusammengebrachten optischen Wellenleitern mit überlappenden evaneszenten Feldern, Stirnflächenkopplern mit vor einer Stirnseite der wellenleitenden Schicht angeordneten fokussierenden Linsen, vorzugsweise Zylinderlinsen, und Gitterkopplern gebildet wird.

26. Planare optische Struktur geeignet zur Erzeugung einer Evaneszentfeld-Messplattform nach Anspruch 24, **dadurch gekennzeichnet, dass** die Einkopplung von Anregungslicht in die optisch transparente erste Schicht mithilfe von einer oder mehreren Gitterstrukturen erfolgt, die in der optisch transparenten ersten Schicht ausgeprägt sind.

27. Planare optische Struktur geeignet zur Erzeugung einer Evaneszentfeld-Messplattform nach einem der Ansprüche 16-21 oder 22-25, **dadurch gekennzeichnet, dass** die Auskopplung von in der optisch transparenten ersten Schicht geführtem Licht mithilfe von Gitterstrukturen erfolgt, die in der optisch transparenten ersten Schicht ausgeprägt sind.

28. Planare optische Struktur geeignet zur Erzeugung einer Evaneszentfeld-Messplattform nach Anspruch 26 und Anspruch 27, **dadurch gekennzeichnet, dass** in der optisch transparenten ersten Schicht ausgeprägte Gitterstrukturen gleiche oder unterschiedliche Periode haben und parallel oder nicht parallel zueinander ausgerichtet sind.

29. Planare optische Struktur geeignet zur Erzeugung einer Evaneszentfeld-Messplattform nach Anspruch 28, **dadurch gekennzeichnet, dass** die Gitterstrukturen wechselseitig als Ein- und / oder Auskoppelgitter verwendet werden können.

30. Planare optische Struktur geeignet zur Erzeugung einer Evaneszentfeld-Messplattform nach einem der Ansprüche 16-21 oder 22-29, **dadurch gekennzeichnet, dass** sich zwischen den optisch transparenten ersten und zweiten Schichten und in Kontakt mit der ersten Schicht eine weitere optisch transparente Schicht mit niedrigerem Brechungsindex als dem der ersten Schicht und einer Stärke von 5 nm - 10000 nm, vorzugsweise von 10 nm - 1000 nm, befindet.

31. Planare optische Struktur geeignet zur Erzeugung einer Evaneszentfeld-Messplattform nach einem der Ansprüche 17-30, **dadurch gekennzeichnet, dass** Gitterstrukturen grossflächig über ausgedehnte Oberflächenbereiche besagter optischer Struktur, bevorzugt über deren gesamte Oberfläche ausgeprägt sind.

32. Planare optische Struktur geeignet zur Erzeugung einer Evaneszentfeld-Messplattform nach einem der Ansprüche 17-30, **dadurch gekennzeichnet, dass** sie eine Vielzahl von Gitterstrukturen auf einem gemeinsamen, durchgehenden Substrat, ausgeprägt in der optisch transparenten ersten Schicht und / oder in der Metallschicht umfasst.

33. Planare optische Struktur geeignet zur Erzeugung einer Evaneszentfeld-Messplattform nach einem der Ansprüche 17-32, **dadurch gekennzeichnet, dass** sie eine Überlagerung von 2 oder mehr Gitterstrukturen unterschiedlicher Periodizität mit zueinander paralleler oder nicht paralleler Ausrichtung der Gitterlinien umfasst.

34. Planare optische Struktur geeignet zur Erzeugung einer Evaneszentfeld-Messplattform nach einem der Ansprüche 17-33, **dadurch gekennzeichnet, dass** eine oder mehrere Gitterstrukturen eine senkrecht zur Ausbreitungsrichtung des in die optisch transparente erste Schicht eingekoppelten Anregungslichts oder des in der Metallschicht erzeugten Oberflächenplasmons räumlich variierende Periodizität aufweisen.

35. Planare optische Struktur geeignet zur Erzeugung einer Evaneszentfeld-Messplattform nach einem der Ansprüche 17-34, **dadurch gekennzeichnet, dass** die Gitterstrukturen und gegebenenfalls zusätzlich vorhandene Gitterstrukturen eine Periode von 200 nm - 1000 nm aufweisen.

36. Planare optische Struktur geeignet zur Erzeugung einer Evaneszentfeld-Messplattform nach einem der Ansprüche 17-35, **dadurch gekennzeichnet, dass** die Gitterstrukturen Reliefgitter mit beliebigem Profil, beispielsweise mit Rechteck-, Dreieck- oder halbkreisförmigem Profil sind.

37. Planare optische Struktur geeignet zur Erzeugung einer Evaneszentfeld-Messplattform nach einem der Ansprüche 16-36, **dadurch gekennzeichnet, dass** auf der Oberfläche der ersten Schicht bzw. der Metallschicht oder auf einer zusätzlich auf der ersten Schicht bzw. der Metallschicht aufgebrachten Haftvermittlungsschicht biologische oder biochemische oder synthetische Erkennungselemente zum qualitativen und / oder quantitativen Nachweis eines oder mehrerer Analyten in einer oder mehreren mit besagten Erkennungselementen in Kontakt gebrachten Proben aufgebracht sind.

38. Planare optische Struktur zur Erzeugung einer Evaneszentfeld-Messplattform nach einem der Ansprüche 16-37, **dadurch gekennzeichnet, dass** die Aussenmasse ihrer Grundfläche mit der Grundfläche von Standard-Mikrotiter-Platten von ca. 8 cm x 12 cm übereinstimmen.

39. Planare optische Struktur geeignet zur Erzeugung einer Evaneszentfeld-Messplattform nach einem der Ansprüche 16-38, **dadurch gekennzeichnet, dass** in der zweiten Schicht Ausnehmungen zur Erzeugung von Probenbehältnissen strukturiert sind.

40. Planare optische Struktur geeignet zur Erzeugung einer Evaneszentfeld-Messplattform nach Anspruch 39, **dadurch gekennzeichnet, dass** besagte Ausnehmungen eine Tiefe von 20 µm bis 500 µm, besonders bevorzugt von 50 µm bis 300 µm, haben.

41. Planare optische Struktur geeignet zur Erzeugung einer Evaneszentfeld-Messplattform nach einem der Ansprüche 16-40, **dadurch gekennzeichnet, dass** sie mechanisch und / oder optisch erkennbare Markierungen zur Erleichterung einer Justierung in einem optischen System und / oder zur Erleichterung der Verbindung besagter planarer optischer Struktur mit einem weiteren Körper zur Erzeugung eines oder mehrerer Probenbehältnisse umfasst.

42. Verwendung einer planaren optischen Struktur zur Erzeugung einer Evaneszentfeld-Messplattform nach einem der Ansprüche 13-41 zu quantitativen oder qualitativen Analysen zur Bestimmung chemischer, biochemischer oder biologischer Analyten in Screeningverfahren in der Pharmaforschung, der Kombinatorischen Chemie, der Klinischen und Präklinischen Entwicklung, zu Echtzeitbindungsstudien und zur Bestimmung kinetischer Parameter im Affinitätsscreening und in der Forschung, zu qualitativen und quantitativen Analytbestimmungen, insbesondere für die DNA- und RNA-Analytik, für die Erstellung von Toxizitätsstudien sowie für die Bestimmung von Gen- oder Protein-Expressionsprofilen sowie zum Nachweis von Antikörpern, Antigenen, Pathogenen oder Bakterien in der pharmazeutischen Protduktentwicklung und -forschung, der Human- und Veterinärdiagnostik, der Agrochemischen Produktentwicklung und -forschung, der symptomatischen und präsymptomatischen Pflanzendiagnostik, zur Patientenstratifikation in der pharmazeutischen Produktentwicklung und für die therapeutische Medikamentenauswahl, zum Nachweis von Pathogenen, Schadstoffen und Erregern, insbesondere von Salmonellen, Prionen, Viren und Bakterien, in der Lebensmittel- und Umweltanalytik.

## Claims

1. Method for producing a planar optical structure suitable for producing an evanescent field measuring platform, said planar optical structure comprising a multilayer system, comprising:
- a metal layer and/or an optically transparent, waveguiding layer having a refractive index n₁ and
- at least one second, optically transparent layer having a refractive index n₂, where n₁ > n₂, and wherein the second layer consists of a thermoplastic,
- **characterized in that** the second layer comprises a material from the group formed by cycloolefin polymers and cycloolefin copolymers and is moulded directly from an original composed of a glass coated with metal oxide, as part of a moulding tool, without further coatings being applied on the surface of said original.

2. Method according to Claim 1, **characterized in that** said evanescent field measuring platform is a planar optical structure for producing a surface plasmon resonance.

3. Method according to Claim 1, **characterized in that** said evanescent field measuring platform is a planar optical waveguide, comprising a first, substantially optically transparent, waveguiding layer having a refractive index n₁ and a second, substantially optically transparent layer having a refractive index n₂, where n₁ > n₂.

4. Production method according to any of Claims 1-3, **characterized in that** the original comprises a material from the group of materials formed by TiO₂ ZnO, Nb₂O₅, Ta₂O₅, HfO₂ or ZrO₂, with TiO₂, Ta₂O₅ or Nb₂O₅ being particularly preferred.

5. Production method according to any of Claims 1-4, **characterized in that**, during the moulding step, grating structures which are situated on the surface of the original and are embodied as relief gratings are transferred into the surface of the second layer.

6. Production method according to Claim 5, **characterized in that** said grating structures fashioned as relief gratings are produced in a surface of the second layer by means of moulding from an original comprising surface relief gratings that are complementary to the grating structures.

7. Production method according to any of Claims 1-4, **characterized in that**, during the moulding step, elevated regions formed on the surface of the original are moulded as cutouts in the second layer.

8. Production method according to Claim 7, **characterized in that** said cutouts in the second layer have a depth of from 20 µm to 500 µm, preferably from 50 µm to 300 µm.

9. Production method according to any of Claims 1-8, **characterized in that** grating structures as relief gratings having a depth of from 3 nm to 100 nm, preferably from 10 nm to 30 nm, and cutouts having a depth of from 20 µm to 500 µm, preferably from 50 µm to 300 µm, are moulded simultaneously in a single moulding step.

10. Production method according to any of Claims 1-9, **characterized in that** the moulding is effected by means of a method from the group of methods comprising injection moulding, reaction injection moulding, liquid injection moulding and hot embossing.

11. Production method according to any of Claims 1-10, **characterized in that** the moulding is effected by means of an injection moulding method.

12. Production method according to Claim 11, **characterized in that** the moulding is effected by means of a variotherm injection moulding method.

13. Planar optical structure suitable for producing an evanescent field measuring platform, comprising a multilayer system comprising:
- a metal layer and/or an optically transparent, waveguiding first layer having a refractive index n₁ and
- at least one second, optically transparent layer having a refractive index n₂, where n₁ > n₂, and wherein the second layer consists of a thermoplastic,
**characterized in that** the second layer comprises a material from the group formed by cycloolefin polymers and cycloolefin copolymers and is moulded directly from an original, as part of a moulding tool, wherein, during the moulding step, grating structures which are situated on the surface of the original and are embodied as relief gratings are transferred in the surface of the second layer.

14. Planar optical structure according to Claim 13, produced by the method according to any of Claims 1 to 12.

15. Planar optical structure suitable for producing an evanescent field measuring platform according to Claim 13, **characterized in that** said evanescent field measuring platform is a planar optical structure for producing a surface plasmon resonance.

16. Planar optical structure suitable for producing an evanescent field measuring platform according to Claim 13, **characterized in that** said evanescent field measuring platform is a planar optical waveguide, comprising a first, optically transparent, waveguiding layer having a refractive index n₁ and a second, optically transparent layer having a refractive index n₂, where n₁ > n₂.

17. Planar optical structure suitable for producing an evanescent field measuring platform according to any of Claims 13-16, **characterized in that** said grating structures fashioned as relief gratings are produced in a surface of the second layer by means of moulding from an original comprising surface relief gratings that are complementary to the grating structures.

18. Planar optical structure suitable for producing an evanescent field measuring platform according to any of Claims 13-17, **characterized in that** cutouts are present in the second layer.

19. Planar optical structure suitable for producing an evanescent field measuring platform according to Claim 18, **characterized in that** said cutouts in the second layer have a depth of from 20 µm to 500 µm, preferably from 50 µm to 300 µm.

20. Planar optical structure suitable for producing an evanescent field measuring platform according to any of Claims 13-17, **characterized in that** its surface comprises grating structures as relief gratings having a depth of from 3 nm to 100 nm, preferably from 10 nm to 30 nm, and cutouts having a depth of from 20 µm to 500 µm, preferably from 50 µm to 300 µm, which can be moulded simultaneously in a single moulding step.

21. Planar optical structure suitable for producing an evanescent field measuring platform according to any of Claims 13-20, **characterized in that** it has an extended three-dimensionally structured surface area of more than 1 cm², preferably of more than 10 cm², particularly preferably of more than 100 cm², which can be moulded in a single moulding step.

22. Planar optical structure suitable for producing an evanescent field measuring platform according to any of Claims 16-21, **characterized in that** the planar optical structure is a planar optical waveguide and the refractive index of the first optically transparent layer is greater than 1.8.

23. Planar optical structure suitable for producing an evanescent field measuring platform according to any of Claims 16-22, **characterized in that** the first optically transparent layer consists of TiO₂ ZnO, Nb₂O₅, Ta₂O₅, HfO₂ or ZrO₂, particularly preferably of TiO₂ and Ta₂O₅.

24. Planar optical structure suitable for producing an evanescent field measuring platform according to any of Claims 16-20 or 22-23, **characterized in that** the waveguiding first layer is in optical contact with at least one optical coupling element for coupling excitation light having one or more wavelengths, from one or more light sources, into the first layer.

25. Planar optical structure suitable for producing an evanescent field measuring platform according to Claim 24, **characterized in that**, for the purpose of coupling excitation light into the optically transparent first layer, said layer is in optical contact with one or more optical coupling-in elements from the group formed by prism couplers, evanescent couplers with unit optical waveguides having overlapping evanescent fields, end face couplers with focusing lenses, preferably cylindrical lenses, arranged in front of an end side of the waveguiding layer, and grating couplers.

26. Planar optical structure suitable for producing an evanescent field measuring platform according to Claim 24, **characterized in that** excitation light is coupled into the optically transparent first layer with the aid of one or more grating structures fashioned in the optically transparent first layer.

27. Planar optical structure suitable for producing an evanescent field measuring platform according to any of Claims 16-21 or 22-25, **characterized in that** light guided in the optically transparent first layer is coupled out with the aid of grating structures fashioned in the optically transparent first layer.

28. Planar optical structure suitable for producing an evanescent field measuring platform according to Claim 26 and Claim 27, **characterized in that** grating structures fashioned in the optically transparent first layer have an identical or different period and are oriented parallel or non-parallel to one another.

29. Planar optical structure suitable for producing an evanescent field measuring platform according to Claim 28, **characterized in that** the grating structures can be used alternately as coupling-in and/or coupling-out gratings.

30. Planar optical structure suitable for producing an evanescent field measuring platform according to any of Claims 16-21 or 22-29, **characterized in that** a further optically transparent layer having a lower refractive index than that of the first layer and a thickness of 5 nm - 10 000 nm, preferably of 10 nm - 1000 nm, is situated between the optically transparent first and second layers and in contact with the first layer.

31. Planar optical structure suitable for producing an evanescent field measuring platform according to any of Claims 17-30, **characterized in that** grating structures are fashioned in a large-area manner over extended surface regions of said optical structure, preferably over the entire surface area thereof.

32. Planar optical structure suitable for producing an evanescent field measuring platform according to any of Claims 17-30, **characterized in that** it comprises a multiplicity of grating structures on a common, continuous substrate, fashioned in the optically transparent first layer and/or in the metal layer.

33. Planar optical structure suitable for producing an evanescent field measuring platform according to any of Claims 17-32, **characterized in that** it comprises a superimposition of two or more grating structures having a different periodicity with the grating lines being oriented parallel or non-parallel to one another.

34. Planar optical structure suitable for producing an evanescent field measuring platform according to any of Claims 17-33, **characterized in that** one or more grating structures have a periodicity that varies spatially perpendicularly to the propagation direction of the excitation light coupled into the optically transparent first layer or of the surface plasmon produced in the metal layer.

35. Planar optical structure suitable for producing an evanescent field measuring platform according to any of Claims 17-34, **characterized in that** the grating structures and, if appropriate, grating structures additionally present have a period of 200 nm - 1000 nm.

36. Planar optical structure suitable for producing an evanescent field measuring platform according to any of Claims 17-35, **characterized in that** the grating structures are relief gratings having any desired profile, for example having a rectangular, triangular or semicircular profile.

37. Planar optical structure suitable for producing an evanescent field measuring platform according to any of Claims 16-36, **characterized in that** biological or biochemical or synthetic identification elements for the qualitative and/or quantitative detection of one or more analytes in one or more samples brought into contact with said identification elements are applied on the surface of the first layer or the metal layer or on an adhesion promoting layer additionally applied on the first layer or the metal layer.

38. Planar optical structure for producing an evanescent field measuring platform according to any of Claims 16-37, **characterized in that** the external dimensions of its base area correspond to the base area of standard microtiter plates of approximately 8 cm x 12 cm.

39. Planar optical structure suitable for producing an evanescent field measuring platform according to any of Claims 16-38, **characterized in that** cutouts for producing sample containers are structured in the second layer.

40. Planar optical structure suitable for producing an evanescent field measuring platform according to Claim 39, **characterized in that** said cutouts have a depth of from 20 µm to 500 µm, particularly preferably from 50 µm to 300 µm.

41. Planar optical structure suitable for producing an evanescent field measuring platform according to any of Claims 16-40, **characterized in that** it comprises mechanically and/or optically identifiable markings for facilitating adjustment in an optical system and/or for facilitating the connection of said planar optical structure to a further body for producing one or more sample containers.

42. Use of a planar optical structure for producing an evanescent field measuring platform according to any of Claims 13-41 for quantitative or qualitative analyses for determining chemical, biochemical or biological analytes in screening methods in pharmaceutical research, combinatorial chemistry, clinical and preclinical development, for real-time binding studies and for determining kinetic parameters in affinity screening and in research, for qualitative and quantitative analyte determinations, in particular for DNA and RNA analysis, for the production of toxicity studies and for the determination of gene or protein expression profiles, and for detecting antibodies, antigens, pathogens or bacteria in pharmaceutical product research and development, human and veterinary diagnostics, agrochemical product research and development, symptomatic and presymptomatic plant diagnostics, for patient stratification in pharmaceutical product development and for therapeutic drug selection, for detecting pathogens, harmful substances and disease-causing agents, in particular salmonellas, prions, viruses and bacteria, in foodstuff and environmental analysis.

## Revendications

1. Procédé de fabrication d'une structure optique plane convenant pour la réalisation d'une plateforme de mesure de champ évanescent, dans lequel ladite structure optique plane comprend un système multicouche comportant :
- une couche métallique et/ou une couche formant guide d'ondes optiquement transparente d'indice de réfraction n₁ et
- au moins une deuxième couche optiquement transparente d'indice de réfraction n₂, avec n₁ > n₂, et dans lequel la deuxième couche est constituée d'une matière thermoplastique,
- **caractérisé en ce que** la deuxième couche comprend un matériau sélectionné dans le groupe constitué de polymères de cyclooléfines et de copolymères de cyclooléfines, et
est directement moulée à partir d'un modèle, constitué de verre revêtu d'oxyde métallique, qui fait partie d'un outil de moulage, sans appliquer d'autres revêtements sur la surface dudit modèle.

2. Procédé selon la revendication 1, **caractérisé en ce que** ladite plateforme de mesure de champ évanescent est une structure optique plane destinée à produire une résonance de plasmon de surface.

3. Procédé selon la revendication 1, **caractérisé en ce que** ladite plateforme de mesure de champ évanescent est un guide d'ondes optique plan comprenant une première couche sensiblement optiquement transparente formant guide d'ondes d'indice de réfraction égal à n₁ et une deuxième couche sensiblement optiquement transparente d'indice de réfraction n₂, avec n₁ > n₂.

4. Procédé de fabrication selon l'une des revendications 1 à 3, **caractérisé en ce que** le modèle comprend un matériau sélectionné dans le groupe de matériaux constitué de TiO₂ ZnO, Nb₂O₅, Ta₂O₅, HfO₂, ou ZrO₂, dans lequel TiO₂, Ta₂O₅ ou Nb₂O₅ sont particulièrement préférés.

5. Procédé de fabrication selon l'une des revendications 1 à 4, **caractérisé en ce que**, lors de l'étape de moulage, des structures de réseaux présentes sur la surface du modèle et réalisées sous la forme de réseaux en relief sont transférées dans la surface de la deuxième couche.

6. Procédé de fabrication selon la revendication 5, **caractérisé en ce que** lesdites structures de réseaux faisant saillie sous forme de réseaux en relief sont formées dans une surface de la deuxième couche par moulage à partir d'un modèle comprenant des réseaux superficiels en relief complémentaires des structures de réseaux.

7. Procédé de fabrication selon l'une des revendications 1 à 4, **caractérisé en ce que**, lors de l'étape de moulage, des régions faisant saillie formées sur la surface du modèle sont moulées sous la forme d'évidements dans la deuxième couche.

8. Procédé de fabrication selon la revendication 7, **caractérisé en ce que** lesdits évidements de la deuxième couche ont une profondeur de 20 µm à 500 µm, de préférence, de 50 µm à 300 µm.

9. Procédé de fabrication selon l'une des revendications 1 à 8, **caractérisé en ce que** des structures de réseaux sont moulées simultanément en une seule étape de moulage sous la forme de réseaux en relief ayant une profondeur de 3 nm à 100 nm, de préférence, de 10 nm à 30 nm, et d'évidements ayant une profondeur 20 µm à 500 µm, de préférence de 50 µm à 300 µm.

10. Procédé de fabrication selon les revendications 1 à 9, **caractérisé en ce que** le moulage est effectué par un procédé sélectionné dans le groupe constitué du moulage par injection, du moulage par injection réactive, du moulage par injection de liquide et de l'estampage à chaud.

11. Procédé de fabrication selon l'une des revendications 1 à 10, **caractérisé en ce que** le moulage est effectué par un procédé de moulage par injection.

12. Procédé de fabrication selon la revendication 11, **caractérisé en ce que** le moulage est effectué par un procédé de moulage par injection de type Variotherm.

13. Structure optique plane convenant pour la réalisation d'une plateforme de mesure de champ évanescent, comprenant un système multicouche comportant :
- une couche métallique et/ou une première couche formant guide d'ondes optiquement transparente d'indice de réfraction n1 et
- au moins une deuxième couche optiquement transparente d'indice de réfraction n₂, avec n₁ > n₂, dans laquelle la deuxième couche est constituée d'une matière thermoplastique,
**caractérisée en ce que** la deuxième couche comprend un matériau sélectionné dans le groupe constitué de polymères de cyclooléfines et de copolymères de cyclooléfines, et est directement moulée à partir d'un modèle, qui fait partie d'un outil de moulage, dans lequel, lors de l'étape de moulage, des structures de réseaux présentes sur la surface du modèle et réalisées sous la forme de réseaux en relief, sont transférées dans la surface supérieure de la deuxième couche.

14. Structure optique plane selon la revendication 13, fabriquée conformément au procédé selon l'une des revendications 1 à 12.

15. Structure optique plane convenant pour la réalisation d'une plateforme de mesure de champ évanescent selon la revendication 13, **caractérisée en ce que** ladite plateforme de mesure de champ évanescent est une structure optique plane destinée à produire une résonance de plasmon de surface.

16. Structure optique plane convenant pour la réalisation d'une plateforme de mesure de champ évanescent selon la revendication 13, **caractérisée en ce que** ladite plateforme de mesure de champ évanescent est un guide d'ondes optique plan comprenant une première couche formant guide d'ondes optiquement transparente d'indice de réfraction n₁ et une deuxième couche optiquement transparente d'indice de réfraction n₂, avec n₁ > n₂.

17. Structure optique plane convenant pour la réalisation d'une plateforme de mesure de champ évanescent selon l'une des revendications 13 à 16, **caractérisée en ce que** lesdites structures de réseaux faisant saillie sous forme de réseaux en relief sont formées dans une surface de la deuxième couche par moulage à partir d'un modèle comprenant des réseaux superficiels en relief complémentaires des structures de réseaux.

18. Structure optique plane convenant pour la réalisation d'une plateforme de mesure de champ évanescent selon l'une des revendications 13 à 17, **caractérisée en ce que** des évidements sont présents dans la deuxième couche.

19. Structure optique plane convenant pour la réalisation d'une plateforme de mesure de champ évanescent selon la revendication 18, **caractérisée en ce que** lesdits évidements de la deuxième couche ont une profondeur de 20 µm à 500 µm, de préférence, de 50 µm à 300 µm.

20. Structure optique plane convenant pour la réalisation d'une plateforme de mesure de champ évanescent selon l'une des revendications 13 à 17, **caractérisée en ce que** sa surface comprend des structures de réseaux superficielles qui peuvent être moulées simultanément en une seule étape de moulage sous la forme de réseaux en relief ayant une profondeur de 3 nm à 100 nm, de préférence, de 10 nm à 30 nm, et d'évidements ayant une profondeur de 20 µm à 500 µm, de préférence, de 50 µm à 300 µm.

21. Structure optique plane convenant pour la réalisation d'une plateforme de mesure de champ évanescent selon l'une des revendications 13 à 20, **caractérisée en ce qu'**elle présente une surface structurée tridimensionnelle étendue de plus de 1 cm², et de préférence, de plus de 10 cm², et de manière particulièrement préférable, de plus de 100 cm², qui peut être moulée en une seule étape de moulage.

22. Structure optique plane convenant pour la réalisation d'une plateforme de mesure de champ évanescent selon l'une des revendications 16 à 21, **caractérisée en ce que** la structure optique plane est un guide d'ondes optique plan et **en ce que** l'indice de réfraction de la première couche optiquement transparente est supérieur à 1,8.

23. Structure optique plane convenant pour la réalisation d'une plateforme de mesure de champ évanescent selon l'une des revendications 16 à 22, **caractérisée en ce** la première couche optiquement transparente est constituée de TiO₂ de ZnO, de Nb₂O₅, de Ta₂O₅, de HfO₂ ou de ZrO₂, et de manière particulièrement préférable, de TiO₂ et de Ta₂O₅.

24. Structure optique plane convenant pour la réalisation d'une plateforme de mesure de champ évanescent selon l'une des revendications 16 à 20 ou 22 à 23, **caractérisée en ce que** la première couche formant guide d'ondes est en contact optique avec au moins un élément de couplage optique pour l'injection dans la première couche de lumière d'excitation à une ou plusieurs longueurs d'onde à partir d'une ou plusieurs sources lumineuses.

25. Structure optique plane convenant pour la réalisation d'une plateforme de mesure de champ évanescent selon la revendication 24, **caractérisée en ce que**, pour l'injection de lumière d'excitation dans la première couche optiquement transparente, cette couche est en contact optique avec un ou plusieurs éléments de couplage optique sélectionnés dans le groupe constitué par des coupleurs à prisme, des coupleurs évanescents comprenant des guides d'ondes optiques reliés entre eux ayant des champs évanescents se chevauchant, des coupleurs à face plane avec lentilles de mise au point, de préférence des lentilles cylindriques, situées devant une face avant de la couche formant guide d'onde, et des coupleurs à réseaux.

26. Structure optique plane convenant pour la réalisation d'une plateforme de mesure de champ évanescent selon la revendication 24, **caractérisée en ce que** l'injection de lumière d'excitation dans la première couche optiquement transparente s'effectue à l'aide d'une ou plusieurs structures de réseaux qui font saillie dans la première couche optiquement transparente.

27. Structure optique plane convenant pour la réalisation d'une plateforme de mesure de champ évanescent selon l'une des revendication 16 à 21 ou 22 à 25, **caractérisée en ce que** le couplage de sortie de la lumière introduite dans la première couche optiquement transparente s'effectue à l'aide de structures de réseaux qui font saillie dans la première couche optiquement transparente.

28. Structure optique plane convenant pour la réalisation d'une plateforme de mesure de champ évanescent selon la revendication 26 et la revendication 27, **caractérisée en ce que** les structures de réseaux faisant saillie dans la première couche optiquement transparente ont des périodes identiques ou différentes et sont orientées parallèlement ou non parallèlement les unes aux autres.

29. Structure optique plane convenant pour la réalisation d'une plateforme de mesure de champ évanescent selon la revendication 28, **caractérisée en ce que** les structures de réseaux peuvent être utilisées alternativement en tant que réseaux de couplage d'entrée et/ou de sortie.

30. Structure optique plane convenant pour la réalisation d'une plateforme de mesure de champ évanescent selon l'une des revendications 16 à 21 ou 22 à 29, **caractérisée en ce qu'**une couche optiquement transparente supplémentaire est présente entre les première et deuxième couches optiquement transparentes, et en contact avec la première couche, et présente un indice de réfraction inférieur à celui de la première couche et une épaisseur de 5 nm à 10000 nm, de préférence, de 10 nm à 1000 nm.

31. Structure optique plane convenant pour la réalisation d'une plateforme de mesure de champ évanescent selon l'une des revendications 17 à 30, **caractérisée en ce que** des structures de réseaux de grande superficie font saillie sur des régions superficielles étendues de ladite structure optique, de préférence sur la totalité de leur surface.

32. Structure optique plane convenant pour la réalisation d'une plateforme de mesure de champ évanescent selon l'une des revendications 17 à 30, **caractérisée en ce qu'**elle comprend une pluralité de structures de réseaux faisant saillie, sur un substrat commun continu, dans la première couche optiquement transparente et/ou dans la couche métallique.

33. Structure optique plane convenant pour la réalisation d'une plateforme de mesure de champ évanescent selon l'une des revendications 17 à 32, **caractérisée en ce qu'**elle comprend une superposition de deux structures de réseaux ou plus ayant des périodicités différentes avec un alignement mutuellement parallèle ou non parallèle des stries des réseaux.

34. Structure optique plane convenant pour la réalisation d'une plateforme de mesure de champ évanescent selon l'une des revendications 17 à 33, **caractérisée en ce qu'**une ou plusieurs structures de réseaux présentent une périodicité variant spatialement perpendiculairement à la direction de propagation de la lumière d'excitation injectée dans la première couche optiquement transparente ou du plasmon de surface produit dans la couche métallique.

35. Structure optique plane convenant pour la réalisation d'une plateforme de mesure de champ évanescent selon l'une des revendications 17 à 34, **caractérisée en ce que** les structures de réseaux ainsi que, le cas échéant, des structures de réseaux supplémentaires, présentent une période de 200 nm à 1000 nm.

36. Structure optique plane convenant pour la réalisation d'une plateforme de mesure de champ évanescent selon l'une des revendications 17 à 35, **caractérisée en ce que** les structures de réseaux sont des réseaux en relief ayant un profil quelconque, par exemple un profil rectangulaire, triangulaire, ou en forme de demi-cercle.

37. Structure optique plane convenant pour la réalisation d'une plateforme de mesure de champ évanescent selon l'une des revendications 16 à 36, **caractérisée en ce que** des éléments de reconnaissance biologiques ou biochimiques ou synthétiques destinés à la détection qualitative et/ou quantitative d'un ou plusieurs analytes présents dans un ou plusieurs échantillons amenés au contact desdits éléments de reconnaissance sont appliqués sur la surface de la première couche ou sur la couche métallique ou sur une couche favorisant l'adhérence appliquée de manière supplémentaire sur la première couche ou la couche métallique.

38. Structure optique plane convenant pour la réalisation d'une plateforme de mesure de champ évanescent selon l'une des revendications 16 à 37, **caractérisée en ce que** les dimensions extérieures de la surface de base correspondant à la surface de base de plaques de microtitrage standard d'environ 8 cm x 12 cm.

39. Structure optique plane convenant pour la réalisation d'une plateforme de mesure de champ évanescent selon l'une des revendications 16 à 38, **caractérisée en ce que** des évidements sont réalisés dans la deuxième couche pour former des réceptacles à échantillons.

40. Structure optique plane convenant pour la réalisation d'une plateforme de mesure de champ évanescent selon la revendication 39, **caractérisée en ce que** lesdits évidements ont une profondeur de 20 µm à 500 µm, et de manière particulièrement préférable, de 50 µm à 300 µm.

41. Structure optique plane convenant pour la réalisation d'une plateforme de mesure de champ évanescent selon l'une des revendications 16 à 40, **caractérisée en ce qu'**elle comprend des repères reconnaissables mécaniquement et/ou optiquement pour faciliter un ajustement dans un système optique et/ou pour faciliter le raccordement de ladite structure optique plane à d'autres corps destinés à former un ou plusieurs réceptacles à échantillons.

42. Utilisation d'une structure optique plane convenant pour la réalisation d'une plateforme de mesure de champ évanescent selon l'une des revendications 13 à 41, pour des analyses quantitatives ou qualitatives pour la détermination d'analytes chimiques, biochimiques ou synthétiques dans des procédés de criblage en recherche pharmaceutique, en chimie combinatoire, dans le développement clinique et pré-clinique, pour des études de liaison en temps réel et pour la détermination de paramètres cinétiques dans le criblage d'affinité et dans la recherche, pour des déterminations qualitatives et quantitatives d'analytes, notamment pour l'analyse de l'ADN et de l'ARN, pour la production d'études de toxicité ainsi que pour la détermination des profils d'expression de gènes ou de protéines ainsi que pour la mise en évidence d'anticorps, d'antigènes, de pathogènes ou de bactéries dans le développement de produits pharmaceutiques et la recherche pharmaceutique, dans le diagnostic humain et vétérinaire, le développement de produits agrochimiques et la recherche agrochimique, le diagnostic végétal symptomatique et présymptomatique, pour la stratification des patients dans le développement de produits pharmaceutiques et pour le choix de médicaments thérapeutiques, pour la mise en évidence de pathogènes, de substances nuisibles et d'agents pathogènes, notamment les salmonelles, les prions, les virus et les bactéries, dans l'analyse des aliments et de l'environnement.
